(19) Europäisches Patentamt
European Patent Office
Office européen des brevets

(11) **EP 1 793 620 A1**

(12) **EUROPEAN PATENT APPLICATION**
published in accordance with Art. 158(3) EPC

(43) Date of publication:
06.06.2007 Bulletin 2007/23

(51) Int Cl.:
*H04N 9/07* *(2006.01)*

(21) Application number: 06767025.7

(22) Date of filing: 20.06.2006

(86) International application number:
PCT/JP2006/012366

(87) International publication number:
WO 2006/137419 (28.12.2006 Gazette 2006/52)

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 21.06.2005 JP 2005180266
19.06.2006 JP 2006169322

(71) Applicant: SONY CORPORATION
Minato-ku
Tokyo (JP)

(72) Inventors:
• Chiba, Takuya,
Sony Corporation
Tokyo, 1080075 (JP)
• Kosakai, Ryota,
Sony Corporation
Tokyo, 108-0075 (JP)
• Matsui, Akira,
Sony Corporation
Tokyo, 108-0075 (JP)

(74) Representative: Tyson, Robin Edward
J.A. Kemp & Co.,
14 South Square,
Gray's Inn
London WC1R 5JJ (GB)

(54) **IMAGE PROCESSING DEVICE AND METHOD, IMAGING DEVICE, AND COMPUTER PROGRAM**

(57) To apply, with higher accuracy, color filter arrangement interpolation to RGB images subjected to color coding to make it possible to obtain higher luminance resolution.

A first correlation value is calculated for pixels around a pixel to be interpolated from outputs of a pair of band-pass filters arranged in the horizontal and the vertical directions.

A second correlation value is calculated for the pixels around the pixel to be interpolated from outputs of a pair of band-pass filters arranged to be shifted by ±45 degrees with respect to the vertical direction. The first and the second correlation values are compared with a correlation line to judge a direction of correlation over all directions (360 degrees) surrounding the pixel to be interpolated. Interpolation of the pixel to be interpolated X is performed on the basis of information on the pixels around the pixel to be interpolated present in the direction specified.

FIG. 10

EP 1 793 620 A1

**Description**

Technical Field

The present invention relates to an image processing device and an image processing method for processing an output signal of a solid-state imaging device that has filters of predetermined color coding (color filters), an imaging apparatus that uses the image processing device or the image processing method, and a computer program.

Background Art

Cameras have a long history as means for recording visual information. Recently, instead of silver salt cameras that perform photographing using a film and a photosensitive plate, digital cameras that digitize images captured by solid-state imaging devices such as a CCD (Charge Coupled Device) and a CMOS (Complementary Metal-Oxide Semiconductor) are widely spread.

An image sensor that uses a solid-state imaging device is constituted by a mechanism in which respective pixels (photodiodes) arranged two-dimensionally convert light into electric charges making use of a photoelectric effect. Usually, color filters including three colors of R (red), green (G), and blue (B) are provided on a light-receiving surface thereof to separate incident light into the three primary colors visible by human eyes. In the respective pixels, signal charges accumulated in association with amounts of incident light through the color filters are read. This makes it possible to obtain RGB image signals visible by human eyes.

Moreover, the RGB image signals are color-space-converted into YUV image signals and used for display output and image recording. YUV represent colors with a luminance signal Y and two chromaticities including a color difference U of red and a color difference V of blue. YUV conversion makes it easy to perform data compression making use of a human visual sensitivity characteristic that resolution for luminance is high and resolution for color is low. For example, color space conversion from RGB to YUV is applied according to the following three expressions in the NTSC (National Television Standards committee) standard.

$$Y=0.6G+0.3R+0.1B \qquad (1)$$

$$Cr(R-Y)=R-(0.3R+0.6G+0.1B) \qquad (2)$$

$$Cb(B-Y)=B-(0.3R+0.6G+0.1B) \qquad (3)$$

For example, there is known a 3CCD imaging apparatus that obtains high-resolution RGB signals by arranging primary color filters of R (red), G (green), and B (blue) in the same spatial phase with respect to three solid-state imaging devices and realizes a high image quality. However, the 3CCD imaging apparatus needs to use the three solid-state imaging devices and use a prism for separating incident light into each of colors of R, G, and B. This makes it difficult to realize a reduction in size and a reduction in cost of the apparatus.

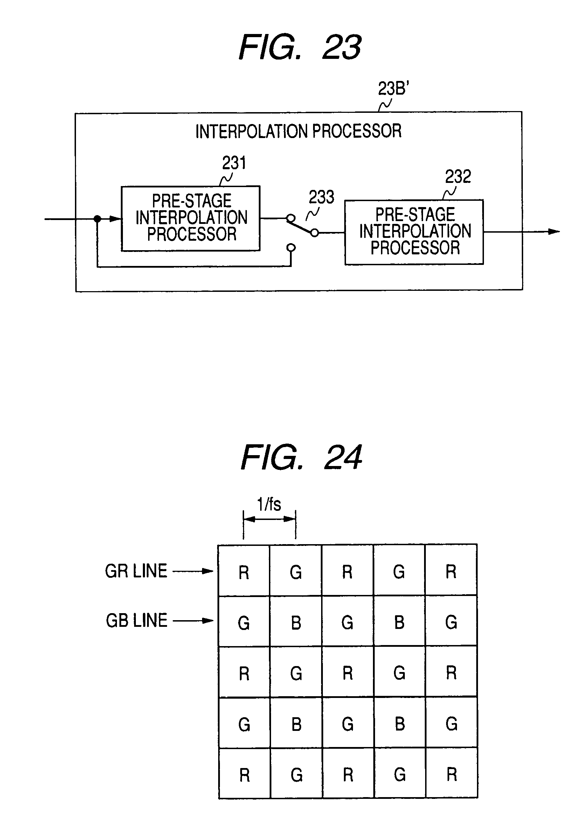

On the other hand, there is also known a 1CCD imaging apparatus that realizes a reduction in size and a reduction in cost by appropriately arranging color filters of R, G, and B in pixel units in one solid-state imaging device. In this 1CCD imaging apparatus, color coding in which respective color filters of R, G, and B are intermittently arranged in pixel units is applied. As representative color coding, there is the Bayer arrangement that has been widely used (see Fig. 24).

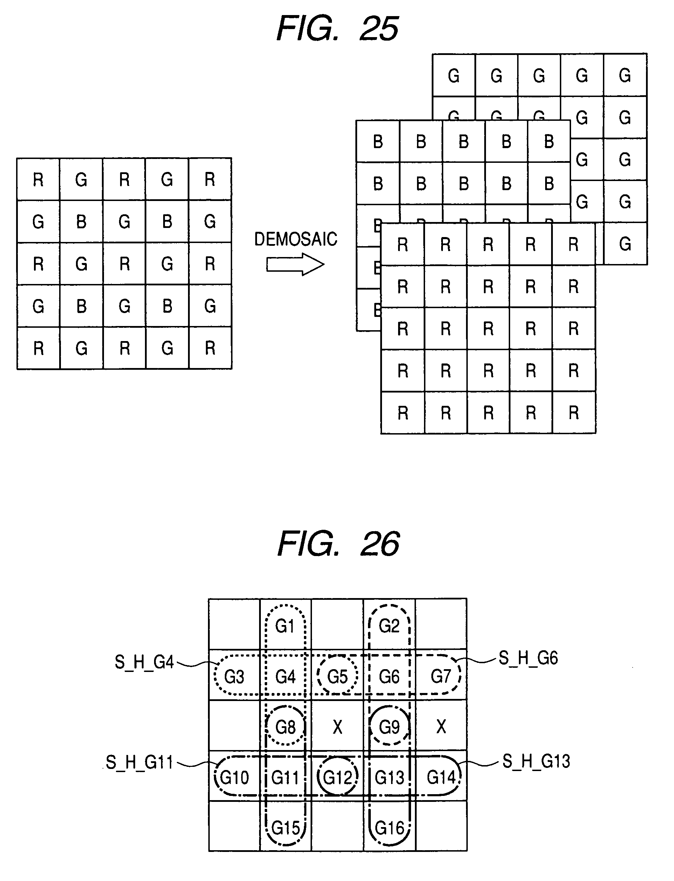

When the color coding is performed, information on components of G and B is lost in pixels in which the color filer of R is arranged, information on components of R and B is lost in pixels in which the color filter of G is arranged, and information on components of G and R is lost in pixels in which the color filter of B is arranged. When the color space conversion is performed in later signal processing, signals of all of R, G, and B are necessary in the respective pixels. This is because, when the luminance signal Y and the color difference signals Cr and Cb are generated from the RGB signals having a spatially different phase using Expressions (1) to (2) above, this causes a false color signal. Therefore, it is necessary to perform the color space conversion after restoring color signals lost in the respective pixels according to color filter arrangement interpolation and creating RGB signals in the same spatial phase (see Fig. 25). Such an interpolation technique is called "demosaic".

Since interpolation accuracy for the RGB signal depends on color coding, characteristics of a solid-state imaging device vary according to the color coding. In the Bayer arrangement shown in Fig. 24, color filters of R and color filters of G are alternately arranged in odd number rows and color filters of G and color filters of B are alternately arranged in even number rows. Since the Bayer arrangement adopts a structure in which a larger number of the color filters of G are arranged compared with the respective color filters of R and B, it is possible to interpolate G with accuracy higher than that for R and B.

As it is evident from Expression (1) above, G is a main component in generating a luminance signal and resolution of the luminance signal substantially depends on resolution of G. Although resolution of an image signal is proportional to a sampling rate 1/fs of pixels (fs is a sampling frequency of the pixels), according to the Bayer arrangement, it is possible to obtain a characteristic that resolution of G is higher than resolution of R and B by improving the accuracy of color filter arrangement interpolation of G. Human beings have a visual sensitivity characteristic that resolution for luminance is high and resolution for color is low. Thus, it can be said that the Bayer arrangement is color coding that successfully utilizes the human visual sensitivity characteristic.

It is important whether it is possible to generate RGB signals in the same spatial phase from RGB signals having spatially different phases according to the interpolation technique. If interpolation processing for an image signal is not optimum, an image having high resolution is not obtained or a false color signal is generated because of the interpolation processing.

For example, there is proposed an image processing device that, in applying interpolation processing to RGB image signals subjected to color coding in the Bayer arrangement, calculates amounts of change in eight pixels near a pixel that should be interpolated, that is, eight pixels in total above and below, on the right and the left, and at the upper right, the lower right, the upper left, and the lower left of a pixel of attention, weights the amounts of change calculated to calculate correlation values, determines interpolation coefficients on the basis of the correlation values calculated, multiplies interpolation data by the interpolation coefficients, respectively, and, then, adds up the interpolation data multiplied by the interpolation coefficients (See, for example, Patent Document 1).

According to this image processing device, it is possible to satisfactorily judge a degree of correlation even for an edge in a direction not orthogonal to a calculation direction of the correlation values by performing the interpolation processing on the basis of the four pixels of pixel information in accordance with the interpolation coefficients. Thus, it is possible to satisfactorily reproduce an oblique edge after the interpolation processing without being blurred. Further, it is possible to satisfactorily perform interpolation in a bent line, a corner part curved at the right angle, and the like.

Incidentally, in the Bayer arrangement, limiting resolutions of resolution of G and resolution of R and B determined from an arrangement of color filters are the same in an oblique 45 degree direction. G is a main component in generating a luminance signal and substantially depends on luminance resolution. R and B substantially depend on resolution of a color difference signal. Thus, a point in generating an image having high resolution is to increase the resolution of G. Human eyes have a characteristic that it is possible to recognize a high frequency concerning luminance but it is difficult to recognize a high frequency concerning a color. Thus, it is anticipated that, in the Bayer arrangement, a balance of color resolution and luminance resolution does not sufficiently match the human visual sensitivity characteristic.

In view of such a point, the applicant proposes color coding in which luminance resolution is increased to twice as large as that of the Bayer arrangement, although of the color resolution is slightly sacrificed, by arranging G components serving as main components in generating a luminance component to surround respective R and B components and increasing G instead of reducing the number of pixels of R and B to a half compared with that of the Bayer arrangement (see, for example, the specification of Japanese patent application No. 2005-107037). Such color coding matches the human visible sensitivity characteristic better than the color coding of the Bayer arrangement. However, more advanced interpolation processing is necessary in order to realize resolution higher than that in the case of the color coding of the Bayer arrangement.

[Patent Document]
JP-A-11-177994

Disclosure of the Invention

Problems that the Invention is to Solve

It is an object of the invention to provide an excellent imaging processing device and image processing method, imaging apparatus, and computer program that apply, with higher accuracy, color filter arrangement interpolation to RGB images subjected to color coding to make it possible to obtain higher luminance resolution.

Means for Solving the Problems

The invention has been devised taking the problems into account. A first aspect of the invention is an image processing device that processes an image imaged by imaging means that has color filters for color coding, characterized by including:

means for inputting an image signal;
correlation-value calculating means for calculating, for the image signal, at least a first correlation value and a second correlation value indicating a degree of correlation among pixels;
interpolation-pixel specifying means for specifying, on the basis of the first correlation value and the second correlation value, other pixels used in interpolating a desired pixel; and
interpolating means for interpolating the desired pixel from the pixel specified by the interpolation-pixel specifying means.

The image processing device according to the invention applies color filter arrangement interpolation to an image signal to which color coding is applied. The color coding uses color filters that have color components serving as main components in calculating a luminance component arranged to surround each of other color components with respect to, for example, a pixel arrangement in which respective pixels are arranged in a square lattice shape at equal intervals in the horizontal direction and the vertical direction. Alternatively, on color filters for color coding, color components serving as main components in calculating a luminance component are arranged to surround each of other color components with respect to an oblique pixel arrangement in which respective pixels are shifted by 1/2 of a pixel pitch for each row or for each column.

In such color coding, a logical limiting resolution of G rises by increasing G instead of reducing the number of pixels of R and B to 1/2 compared with that of the Bayer arrangement. Therefore, since resolution of G is improved to near the limiting resolution by subjecting G to interpolation processing with high accuracy, it is possible to improve luminance resolution to about twice as large as that of the Bayer arrangement, although color resolution is slightly sacrificed.

When G is interpolated in a pixel in a space position to be interpolated (i.e., in which G serving as a main component of a luminance signal is lost), the correlation-value calculating means calculates, for pixel signals around the pixel, correlation values indicating intensity of a correlation of G among pixels at least in two or more directions.

As the correlation values among the pixels, it is possible to filter image signals in two directions orthogonal to each other such as the horizontal direction and the vertical direction of an image and calculate a correlation value in one directional characteristic from a filter output of the filtering. The filter in this context is preferably a band-pass filter that removes a DC component. It is possible to use a high-pass filter such as a differential filter as the filter.

When a band-pass filter output in the horizontal direction is BPF(H) and a band-pass filter output in the vertical direction is BPF(V), a correlation value S (HV) in the horizontal and vertical directions HV is represented as BPF (H)/ {BPF (H) +BPF (V)} . S(HV) takes a value from 0 to 1. However, when S (HV) is close to 1, there is waviness of an image signal in the vertical direction, which indicates that a correlation among pixels is high in the vertical direction. Thus, it is preferable to specify a pixel located in the vertical direction among pixels surrounding a desired pixel as a pixel for interpolation. Conversely, when S (HV) is close to 0, there is waviness of an image signal in the vertical direction, which indicates that a correlation among pixels is high in the horizontal direction. Thus, it is preferable to specify a pixel located in the horizontal direction of the desired pixel as a pixel for interpolation.

The correlation-value calculating means can calculate the correlation value S(HV) in the horizontal and vertical directions as a first correlation value. However, in the case in which only a correlation value calculated with a single directional characteristic is used, when the correlation value S(HV) takes a value near 0.5, it is unclear whether a correlation among pixels in a direction of +45 degrees with respect to a vertical axis is high or a correlation among pixels in a direction of -45 degrees with respect to the vertical axis is high. Thus, it is impossible to specify a pixel for interpolation.

Thus, the correlation-value calculating means further calculates a second correlation value in a directional characteristic different from that of the first correlation value and compensates for an intermediate value taken by the first correlation value to improve resolution for specifying a direction in which a pixel is interpolated in the interpolation-pixel specifying means.

In the correlation-value calculating means, another pair of filters orthogonal to each other that have a directional characteristic different from that of a pair of filters orthogonal to each other used in calculating the first correlation value are disposed. The correlation-value calculating means calculates the second correlation value on the basis of outputs of these filters.

When the correlation value S(HV) in the horizontal and vertical directions HV is calculated as the first correlation value as described above, it is possible to use, as the second correlation value, a correlation value S(NH/NV) in a non-horizontal and non-vertical directions NH/NV calculated on the basis of a band-pass filter output BPF(NH) in the non-horizontal direction NH orthogonal to band-pass filter outputs BPF(NH) and BPF(HN) in the non-horizontal direction NH. S(NH/NV) is represented as BPF(NH)/{BPF(NH)+BPF(NV)}.

When directions rotated by $\pm 45$ degrees with respect to the vertical direction H are set as the non-horizontal direction NH and the non-vertical direction NV and the second correlation value is calculated from outputs of band-pass filters arranged in the NH and NV directions orthogonal to each other, the first correlation value and the second correlation value can compensate for each other when one of the correlation values is a correlation value near 0.5. Thus, resolution for specifying an interpolation direction is maximized.

In other words, according to the image processing device according to the invention, the interpolation-pixel specifying means can judge a direction of correlation over all directions (360°) by comparing plural correlation values calculated by the correlation-value calculating means and specify, in a finer granularity, a direction that in which interpolation should be performed. The interpolating means only has to apply interpolation processing to a pixel to be interpolated on the basis of information on pixels around a pixel present in the direction specified.

A second aspect of the invention is an image processing device that processes an image imaged by imaging means that have color filters for color coding, the image processing device characterized by including:

means for inputting an image signal;
correlation-value calculating means for calculating, for the image signal, at least a first correlation value and a second correlation value indicating a degree of correlation among pixels;
reliability calculating means for calculating reliability concerning the respective correlation values calculated by the correlation-value calculating means; and
interpolating means for interpolating a desired pixel in interpolation processing corresponding to the reliability.

According to the first aspect of the invention, it is possible to calculate two or more correlation values having different directional characteristics concerning pixels values around a pixel to be interpolated, judge a direction of correlation over all directions (360°) by comparing these plural correlation values, and specify, in a finer granularity, a direction in which interpolation should be performed. However, such a method of specifying a direction to be interpolated is performed on condition that the correlation values calculated in the respective directional characteristics is reliable.

Thus, the image processing device according to the second aspect of the invention calculates reliability concerning the first correlation value and the second correlation value and interpolates a desired pixel signal using an interpolation processing method corresponding to the reliability. For example, it is possible to calculate reliability on the basis of a sum of respective correlation values calculated by the correlation value calculating means.

When the calculated correlation values are reliable, in the same manner as the image processing device according to the first aspect of the invention, the image processing device judges a direction of correlation over all directions (360 degrees) by comparing the plural correlation values with a correlation line to thereby determine a direction in which interpolation should be performed and perform pixel interpolation with higher accuracy. As a result, it is possible to obtain a luminance signal having high resolution on the basis of a G signal having high resolution.

On the other hand, when the calculated correlation values lack reliability, the image processing device performs interpolation using an average of information on pixels around a pixel to be interpolated. In this case, accuracy of the pixel to be interpolated is controlled and it is impossible to obtain a luminance signal having high resolution. On the other hand, it is possible to improve SN according to averaging processing.

A third aspect of the invention is a computer program described in a computer-readable format to execute, on a computer, processing for an image imaged by imaging means that has color filters for color coding, the computer program characterized by causing the computer to execute:

a correlation-value calculating procedure for calculating, for an image signal imaged by the imaging means, at least a first correlation value and a second correlation value indicating a degree of correlation among pixels;
an interpolation-pixel specifying procedure for specifying, on the basis of the first correlation value and the second correlation value, other pixels used in interpolating a desired pixel; and
an interpolating procedure for interpolating the desired pixel from the pixel specified by executing the interpolation-pixel specifying procedure.

A fourth aspect of the invention is a computer program described in a computer-readable format to execute, on a computer, processing for an image imaged by imaging means that has color filters for color coding, the computer program characterized by causing the computer to execute:

a correlation-value calculating procedure for calculating, for an image signal imaged by the imaging means, at least a first correlation value and a second correlation value indicating a degree of correlation among pixels;
a reliability calculating procedure for calculating reliability concerning the respective correlation values calculated by executing the correlation-value calculating procedure; and
an interpolating procedure for interpolating a desired pixel in interpolation processing corresponding to the reliability.

The computer programs according to the third and the fourth aspects of the invention define computer programs described in a computer-readable format to realize predetermined processing on a computer. In other words, by installing the computer programs according to the third and the fourth aspects of the invention, cooperative actions are shown on the computer. It is possible to obtain operational effects same as those of the image processing devices according to the first and the second aspects of the invention, respectively.

Advantages of the Invention

According to the invention, it is possible to provide an excellent image processing device and image processing method, imaging apparatus, and computer program that apply, with higher accuracy, color filter arrangement interpolation to RGB images subjected to color coding to make it possible to obtain higher luminance resolution.

According to the invention, in particular, it is possible to highly accurately apply color filter arrangement interpolation of main components for calculating a luminance component to an image signal subjected to color coding that uses color filters on which color components serving as main components in calculating a luminance component are arranged to surround each of other color components in a pixel arrangement in which respective pixels are arranged in a square lattice shape to be arranged at equal intervals in the horizontal direction and the vertical direction.

The image processing device according to the invention can judge a direction of correlation over all directions (360 degrees) with respect to a pixel to be interpolated. Thus, it is possible to perform appropriate interpolation processing on the basis of the direction judged.

Other objects and characteristic advantages of the invention will be apparent according to more detailed explanations based on embodiments of the invention described later and drawings attached hereto.

Brief Description of the Drawings

Fig. 1 is a block diagram showing an example of a structure of an imaging apparatus to which an image processing device or an image processing method according to the invention is applied.

Fig. 2 is a diagram showing a pixel arrangement in which only G is extracted in the Bayer arrangement.

Fig. 3 is a diagram showing a resolution chart.

Fig. 4 is a graph showing a frequency characteristic of a band-pass filter.

Fig. 5 is a graph showing limiting resolutions of G resolution and RB resolution in the Bayer arrangement.

Fig. 6 is a diagram showing a color coding example subjected to interpolation processing according to a first embodiment of the invention.

Fig. 7 is a graph showing limiting resolutions of G resolution and RB resolution in the color coding example.

Fig. 8 is a diagram showing a pixel arrangement in which only G is extracted in the color coding example.

Fig. 9 is a diagram showing a relation among an H direction, a V direction, an NH direction, and an NV direction.

Fig. 10 is a flowchart showing a procedure of the interpolation processing according to the first embodiment of the invention.

Fig. 11 is a graph showing a frequency characteristic of a band-pass filter in H and V directions.

Fig. 12 is a graph showing a frequency characteristic of band-pulse filters in the NH and the NV directions.

Fig. 13 is a diagram showing a resolution chart.

Fig. 14 is a correlation line diagram showing a relation between respective points in a frequency chart and correlation values of the points.

Fig. 15 is a diagram showing a relation between a correlation value and an interpolation value.

Fig. 16 is a block diagram showing an example of a structure of an interpolation processor that executes the interpolation processing according to the first embodiment.

Fig. 17 is a diagram showing a color coding example subjected to interpolation processing according to a second embodiment of the invention.

Fig. 18 is a diagram representing the color coding example as a square lattice.

Fig. 19 is a block diagram showing an example of a structure of an interpolation processor that executes the interpolation processing according to the second embodiment.

Fig. 20 is a diagram showing a result of interpolation processing by a pre-stage interpolation processor.

Fig. 21 is a diagram showing a result of interpolation processing by a post-stage interpolation processor.

Fig. 22 is a diagram showing spatial resolution characteristics in the Bayer arrangement, color coding 1, and color coding 2.

Fig. 23 is a block diagram showing a modification of the interpolation processor that executes the interpolation processing according to the second embodiment.

Fig. 24 is a diagram showing color coding of the Bayer arrangement.

Fig. 25 is a diagram showing a state in which a picture subjected to color coding is subjected to demosaic processing.

Fig. 26 is a diagram showing a state in which correlation values in the H and the V directions with four pixels around an interpolation pixel X set as the centers, respectively, are calculated.

Fig. 27 is a diagram showing a state in which S_H_G4 and S_H_G13 are selected as reliable correlation values.

Fig. 28 is a diagram showing a state in which a correlation value in the H and the V directions with the interpolation pixel X set as the center are calculated.

Fig. 29 is a diagram showing a state in which correlation values in the NH and the NV directions with four pixels around the interpolation pixel X set as the centers, respectively, are calculated.

Fig. 30 is a diagram showing a state in which S_NH_G5 and S_NH_G9 are selected as reliable correlation values.

Fig. 31 is a diagram showing a state in which correlation values in the NH and the NV directions with the interpolation pixel X set as the center are calculated.

Fig. 32 is a graph in which a correlation line formed by an absolute value obtained by deducting 0.5 from complementary S_H (a correlation line (A) in Fig. 14) and a correlation line formed by an absolute value obtained by deducting 0.5 from S_NH (a correlation line (B) in Fig. 14) are plotted, respectively.

Description of Reference Numerals and Signs

| | |
|---|---|
| 11 | Imaging lens |
| 12 | Imaging device |
| 14 | Camera signal processor |
| 21 | Optical system correction circuit |
| 22 | WB (White Balance) circuit |
| 23, 23A, 23B, 23B' | Interpolation processors |
| 24 | Gamma correction circuit |
| 25 | Y (luminance) signal processor |
| 26 | C (chroma) signal processor |
| 27 | Band limiting LPF (Low-Pass Filter) |
| 28 | Thinning-out processor |
| 31 to 34, 37 to 40 | Correlation-value calculating circuits |
| 35, 41 | Selection circuits |
| 36, 42 | Average-value calculating circuits |
| 43 | Comparator |
| 44 | Judging circuit |
| 45 | Interpolation circuit |

Best Mode for Carrying out the Invention

Embodiments of the invention will be hereinafter explained in detail with referenced to the drawings.

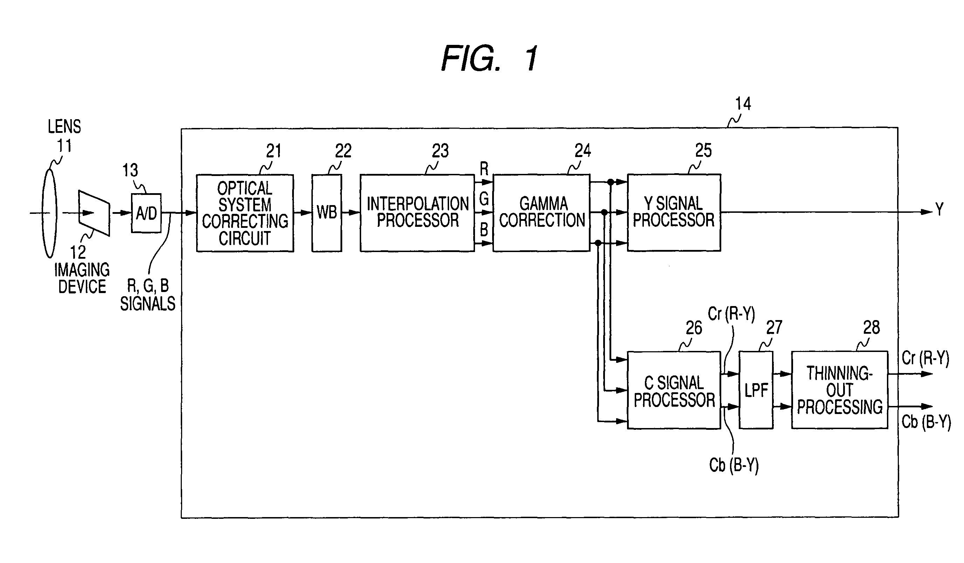

An example of a structure of an imaging apparatus that uses an image processing device or an image processing method according to the invention is shown in Fig. 1.

The imaging apparatus in this context includes camera modules including a solid-state imaging device serving as an imaging device, an optical system that focuses image light of a subject on an imaging surface (a light-receiving surface) of the solid-state imaging device, and a signal processor for the solid-state imaging device, camera apparatuses such as a digital still camera and a video camera mounted with the camera modules, and electronic apparatuses such as a cellular phone.

In Fig. 1, an image light from a subject (not shown) is focused on an imaging surface of an imaging device 12 by an optical system, for example, an imaging lens 11. A solid-state imaging device, in which a large number of pixels including photoelectric conversion elements are two-dimensionally arranged in a matrix shape and color filters including color components serving as main components in creating a luminance component and other color components are arranged on the surface of the pixels, is used as the imaging device 12.

The solid-state imaging device that has the color filters may be any one of a charge transfer solid-state imaging device represented by a CCD (Charge Coupled_ Device), an X-Y addressable solid-state imaging device represented by a MOS (Metal Oxide Semiconductor), and the like.

In the following explanation, in a color filter, color components serving as main components in creating a luminance (Y) component are explained with green (G) as an example and other color components are explained with red (R) and blue (B) as examples. However, the gist of the invention is not limited to a combination of these color components. It is also possible to use, for example, white, cyan, or yellow as the color components serving as the main components in creating the Y component and use, for example, magenta, cyan, or yellow as the other color components.

Only light of the respective color components of the image light made incident on the imaging device 12 passes through the color filters to be made incident on the respective pixels. The light made incident on the respective pixels is photoelectrically converted by a photoelectric conversion element such as a photodiode. The light is read out as analog image signals from the respective pixels, converted into digital image signals by an A/D converter 13, and, then, inputted to a camera signal processor 14, which is the image processing device according to the invention.

The camera signal processor 14 includes an optical system correction circuit 21, a White Balance (WB) circuit 22, an interpolation processor 23, a gamma correction circuit 24, a Y (luminance) signal processor 25, a C (Chroma) signal processor 26, a band limiting LPF (Low-Pass Filter) 27, and a thinning-out processor 28.

The optical system correction circuit 21 performs correction for the imaging device 12 and the optical system such as digital clamp for adjusting a black level to a digital image signal inputted to the camera signal processor 14, defect correction for correcting a defect of the imaging device 12, and shading correction for correcting a fall in an amount of ambient light of the imaging lens 11.

The WB circuit 22 applies processing for adjusting a white balance to an image signal, which has passed the optical system correction circuit 21, to make R, G, and B the same for a white subject. The interpolation processor 23 creates pixels with different spatial phases according to interpolation. In other words, the interpolation processor 23 creates three planes (RGB signals in the same spatial position) from RGB signals with phases shifted from one another spatially. Specific interpolation processing in the interpolation processor 23 is a characteristic of the invention. Details of the interpolation processing will be described later.

The gamma correction circuit 24 applies gamma correction to the RGB signals in the same spatial position and, then, supplies the RGB signals to the Y signal processor 25 and the C signal processor 26. The gamma correction is processing for, in order to correctly represent gradations of colors of a subject, multiplying color signals of R, G, and B outputted from the WB circuit 22 by predetermined gains such that the photoelectric conversion characteristics of an entire system including the imaging device 12 and video reproducing means at a later stage thereof to be 1.

The Y signal processor 25 generates a luminance (Y) signal according to Expression (1) described above. The C signal processor 26 generates color difference signals Cr(R-Y) and Cb(B-Y) according to Expressions (2) and (3) described above.

The band limiting LPF 27 is a filter that has a cut-off frequency of 1/8 of a sampling frequency fs. The band limiting LPF 27 reduces a pass band from (1/2) fs to (1/8) fs for the color difference signals Cr and Cb. This is an output adjusted to a TV signal format. When the color difference signals Cr and Cb are outputted without being subjected to band limitation, a frequency signal equal to or higher than 1/8 fs is outputted as a false color signal. The thinning-out circuit 28 performs thinning-out for sampling of the color difference signals Cr and Cb.

What is important is that the color (C) signal (the color difference signals Cr and Cb) needs only a band equal to or smaller than 1/4 of a band for the luminance (Y) signal. This is because human eyes have a characteristic that it is possible to recognize a high frequency for luminance but it is difficult to recognize a high frequency for a color (as described above) and a format of a TV signal is also determined accordingly.

Actually, when a difference between an output image in the case of Y: Cr: Cb=4 :4 :4 (output bands of Y and C are the same) and an output image in the case of Y:Cr:Cb=4:1:1 is observed, it is difficult to identify the difference in a usual subject other than a special subject, for example, point sources of light of red and blue. In other words, it is seen that, as defined in the TV signal format, sufficient resolution is obtained for the C signal with only a band 1/4 of a band width of the Y signal.

The interpolation processing in the interpolation processor 23, which is the characteristic part of the invention, will be described.

As described above, the interpolation processing is, as described above, color filter arrangement interpolation for generating a signal of a color component, which is missing in a pixel because of intermittent arrangement of color filters, according to interpolation that uses signals of pixels around the pixel, that is, pixels having different spatial phases. The interpolation processing is also called demosaic. This interpolation processing is processing extremely important for obtaining an image having high resolution. This is because, when a pixel cannot be successfully interpolated by the interpolation processing, a false signal is generated to cause deterioration in resolution and occurrence of false colors. If it is impossible to interpolate G components serving as main components of a luminance signal with high accuracy, resolution of the luminance signal is deteriorated.

As the interpolation processing for obtaining high resolution, interpolation processing that uses correlation processing has been performed. The "correlation processing" is processing for interpolating a pixel to be interpolated using information on pixels in a direction in which correlation is high.

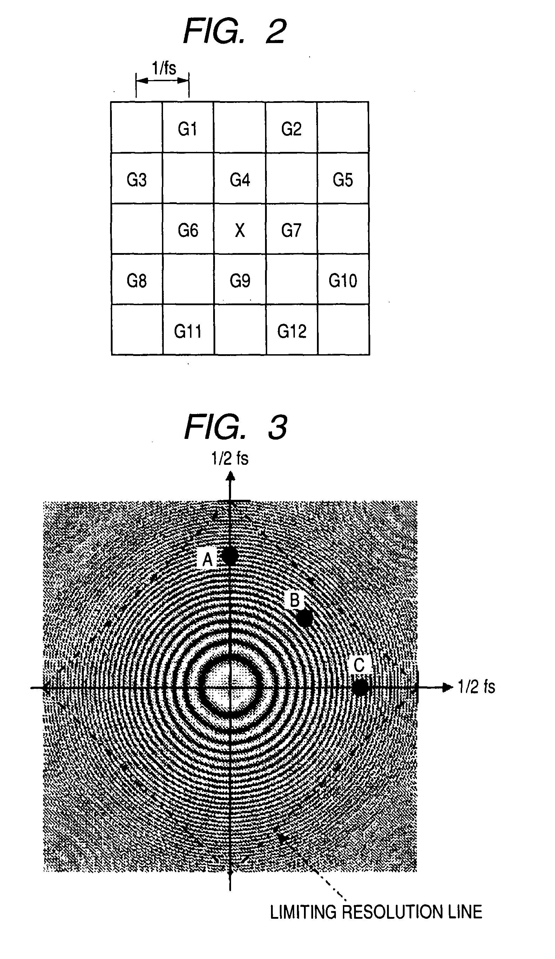

For example, the interpolation processing for a pixel is considered with an input image according to a resolution chart shown in Fig. 3 as an example. The resolution chart is a chart in which the center indicates a signal having a low frequency and positions farther apart from the center indicate signals having higher frequencies. In the resolution chart signals having the same frequency have various directions. It is possible to analyze what kind of processing is suitable for various signals by inputting a signal of the resolution chart to a signal processor. In the figure, when a subject is a subject of horizontal lines as at an A point on the ordinate, waviness is observed in an image signal in the vertical direction. On the other hand, since a correlation of image signals in the horizontal direction is high, the pixel is interpolated using pixels in the horizontal direction. When a subject is a subject of vertical lines as at a C point on the abscissa, waviness is observed in the horizontal direction. On the other hand, since a correlation of image signals in the vertical direction is high, the pixel is interpolated using pixels in the vertical direction. It is possible to realize higher resolution by performing the interpolation processing using images around the pixel in a direction in which a correlation is high in this way.

The interpolation processing that uses the correlation processing is effective for processing for generating a G signal in a spatial position of a pixel in a spatial position where G is not present, for example, a pixel X in the figure in color coding like the Bayer arrangement in which color components G are arranged in a checkered pattern. It goes without saying that the interpolation processing is usually applied not only to the G signal but also to remaining R and B signals. In the explanation of this specification, attention is paid to the interpolation processing for the G signal for realizing high resolution for a luminance signal. However, it is also possible to apply interpolation processing same as that for G to R and B, or other colors such as cyan and yellow.

The interpolation processing is processing for generating a signal of a pixel, which should be interpolated, according to interpolation that uses signals of pixels around the pixel having different spatial phases. Thus, a procedure of the interpolation processing depends on a layout of the pixels around the pixel, that is, color coding. First, interpolation processing for the Bayer arrangement will be explained. As it is evident from Fig. 2, color components G of the Bayer arrangement are arranged in a checkered pattern. The interpolation processing is applied to portions where the color components G are not arranged in the Bayer arrangement (hereinafter referred to as "interpolation pixels").

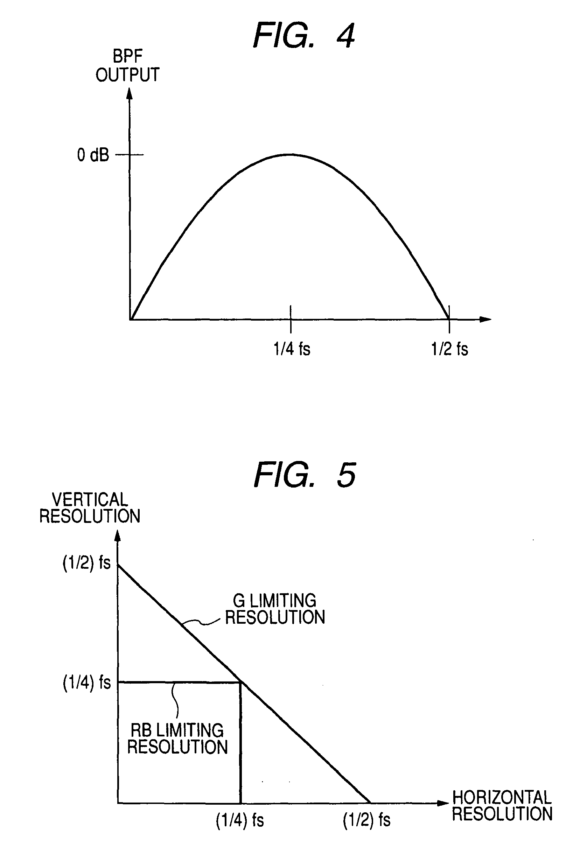

Filtering by a band-pass filter is applied in the horizontal and the vertical directions with the spatial position (the interpolation pixel) X as the center to calculate amplitude of an image signal observed from the horizontal and the vertical directions (i.e., waviness of image signals in the horizontal and the vertical directions). The band-pass filter is a filter that has a peak at 1/4 fs (fs is sampling frequency) and outputs a value with respect to a signal having a frequency up to a frequency near limiting resolution of 1/2 fs, as shown in Fig. 4. When an output of the band-pass filter is large, a signal having large amplitude is present in a direction in which the output is large. Conversely, when an output of the band-pass filter is small, fluctuation in a signal is small, or a signal of a low frequency is present, in a direction in which the output is small. For example, it is possible to use a high-pass filter such as a differential filter. However, any filter may be used as long as the filter has a band limiting characteristic for removing a DC component.

When a filter output of a band-pass filter arranged in the horizontal direction with the spatial position (the interpolation pixel) X as the center is Bpf_H and a filter output of a band-pass filter arranged in the vertical direction in the same manner is Bpf_V, these filter outputs are represented as follows, respectively.

$$\mathrm{Bpf\_H = -(G3+G8)+2(G4+G9)-(G5+G10)}$$

$$\mathrm{Bpf\_V = -(G1+G2)+2(G6+G7)-(G11+G12)}$$

Outputs Bpf_H and Bpf_V of these two band-pass filters are observed in the respective points A to C in Fig. 3. At the A point, since there is no amplitude of an image signal in the horizontal direction, Bpf_H=0. At the B point, since there is amplitude of an image signal in an oblique 45 degree direction, Bpf_H=Bpf_V. At the C point, since there is no amplitude of an image signal in the vertical direction, Bpf_V=0.

Subsequently, respective correlation values S_H and S_V in the horizontal and the vertical directions are calculated from the following expressions by using the outputs Bpf_H and Bpf_V of the band-pass filter.

$$S\_H = Bpf\_V / (Bpf\_H + Bpf\_V)$$

$$S\_V = 1 - S\_H$$

The correlation values S_H and S_V in the horizontal and the vertical directions represent intensity of a correlation of image signals among adjacent pixels in the horizontal and the vertical directions. "Correlation" means a fluctuation ratio of a signal. As indicated by the expressions described above, the correlation values S_H and S_V are represented by a ratio of the filter outputs Bpf_H and Bpf_V of the band-pass filters located in the horizontal and the vertical directions, respectively. When the fluctuation ratio of a signal is large, a correlation is low. When the fluctuation ratio of a signal is small, a correlation is high.

In the example shown in Fig. 3, at the A point, since S_H=1 and S_V=0, it is possible to consider that a straight line component is present in the horizontal direction (no fluctuation in a signal or a signal is flat). Since a fluctuation ratio of a signal is small, a correlation is high in the horizontal direction and there is no correlation in the vertical direction. Accuracy of interpolation is improved by interpolating the interpolation pixel X with pixels in a direction in which a correlation value is large, that is, a correlation is high. If accurate interpolation is realized for the G signal, resolution of a luminance signal including G as a main component is also high.

At the B point, S_H=S_V=0.5. This indicates that correlations in the horizontal and the vertical directions are identical, or the same change in an image occurs in both the horizontal and the vertical directions. At the C point, S_H=0 and S_V=1. This indicates that correlation in the vertical direction is high.

Subsequently, an interpolation value X of the interpolation pixel X is calculated in accordance with the following expression using G signals of pixels above and below and on the left and the right of the interpolation pixel X.

$$X = \{ (G6 + G7) \times S\_H + (G4 + G9) \times S\_V \} / 2$$

As it is seen from the above expression, interpolation processing is applied to the interpolation pixel X by applying a large weight in a direction in which a correlation is high. For example, at the A point, since X=(G6+G7)/2, the interpolation pixel X is interpolated using pixels in the horizontal direction. At the B point, since X=(G6+G7+G4+G9)/4, the interpolation pixel X is interpolated with an equal weight using pixels in the horizontal and the vertical directions. At the C point, since X=(G4+G9)/2, the interpolation pixel X is interpolated using pixels in the vertical direction.

It should be fully understood that it is possible to realize high resolution by interpolating the interpolation pixel X while applying weight to (weighting) components of pixels in a direction in which a change in amplitude of an image signal is small, or a direction in which a correlation is high, using the correlation processing as described above.

Respective limiting resolutions of G resolution and RB resolution in the Bayer arrangement are shown in Fig. 5. As it is seen from the figure, the resolution of G is 1/2 fs in the horizontal and the vertical directions and is (1/2√2) fs in the oblique 45 degree direction. In particular, the resolution of G and the resolution of RB are the same in the oblique 45 degree direction.

As it is seen from Expressions (1) to (3) for color space conversion, G is a main component in creating a luminance signal and substantially depends on luminance resolution and RB substantially depends on resolution of a color difference signal. Therefore, an increase in resolution for G is important in generating an image having high resolution. Human eyes have a characteristic that it is possible to recognize a high frequency for luminance but it is difficult to recognize a high frequency for a color. Thus, in the Bayer arrangement, a balance between color resolution and luminance resolution does not match the human visual sensitivity characteristic.

In view of such a point, in the specification of Japanese Patent Application No. 2005-107037 already assigned to the applicant, the applicant proposes color coding in which G components serving as main components in creating a luminance component are arranged to surround respective RB components (as described above). According to this color coding, color resolution is slightly sacrificed but luminance resolution is improved to be about twice as large as that of the Bayer arrangement by increasing G instead of halving the number of pixels of R and B compared with the Bayer arrangement.

The inventors consider that the color coding in which the RB components are surrounded by the G components matches the human visual sensitivity characteristic better than the color coding of the Bayer arrangement. In particular, in a signal processing system complying with an output format of Y:Cr:Cb=4:1:1, for example, in a signal processing system of a video camera or the like, the color coding in the band described above is more desirable. However, to obtain a luminance signal including G as a main component at high resolution, interpolation processing more advanced than that in the case of the color coding of the Bayer arrangement is required.

In the following description, two examples of color coding are explained as color coding in which components serving as main components in creasing a luminance component, for example, G, are arranged to surround respective components of R and B. Interpolation processing for the respective examples of color coding will be explained as a first embodiment and a second embodiment, respectively.

[First embodiment]

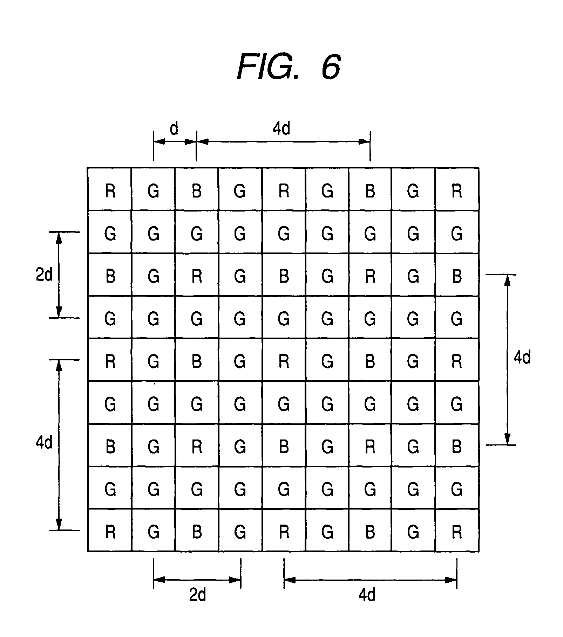

A diagram showing a color coding example be subjected to interpolation processing according to a first embodiment of the invention is shown in Fig. 6. In the color coding example shown in the figure, pixels are arranged in a square lattice shape such that the pixels are arranged at equal intervals (pixel pitches) d in the horizontal direction (a row direction along pixel rows) and the vertical direction (a column direction along pixel columns). In a first row, pixels are arranged in repetition of RGBG with four pixels in the horizontal direction as a unit. In a second row, only pixels of G are arranged. In a third row, pixels are arranged in repetition of BGRG with four pixels in the horizontal direction as a unit. In a fourth row, only pixels of G are arranged. The following rows are arranged as repetition of these four rows as a unit. As it is seen from the figure, color components (in this example, G) serving as main components in creating a luminance (Y) component and other color components (in this example, R and B) are arranged such that the color components G surround the color components R and B. The color components R and B are arranged at intervals of 4d in the horizontal and the vertical directions.

Considering sampling rates in the horizontal and the vertical directions when a sampling rate among the pixels is set to d corresponding to the pixel pitches, the color components R and B are arranged in every other column (in the first embodiment, odd number columns) and every other row (in a second embodiment described later, odd number rows) such that sampling rates in the horizontal and the vertical directions are rates that are half the sampling rate for G. In other words, a sampling rate for G is d and a sampling rate for R and B is 2d and resolution in the horizontal and the vertical directions of the color components G is twice as large as that of the color components R and B. Considering a sampling rate in the oblique 45 degree direction, a sampling rate for G is $d/2\sqrt{2}$ and a sampling rate for R and B is $2d/\sqrt{2}$.

A spatial frequency characteristic will be considered. In the horizontal and the vertical directions, since the sampling rate for G is d, it is possible to catch a G signal having a frequency up to $(1/2)$ fs on the basis of the sampling theorem. In the oblique 45 degree direction, since the sampling rate for G is $d/2\sqrt{2}$, it is possible to catch a G signal having a frequency up to $(1/\sqrt{2})$ fs on the basis of the sampling theorem.

The spatial frequency characteristic of the color components R and B will be considered in the same manner. However, since intervals of pixel arrangement of R and B are the same and can be considered in the same way, only the component R will be described below. In the horizontal and the vertical directions, since the sampling rate for R is 2d, it is possible to catch a R signal having a frequency up to 1/4 fs on the basis of the sampling theorem. In the oblique 45 degree direction, since the sampling rate for R is $d/2\sqrt{2}$, it is possible to catch a signal having a frequency up to $(1/4\sqrt{2})$ fs on the basis of the sampling theorem.

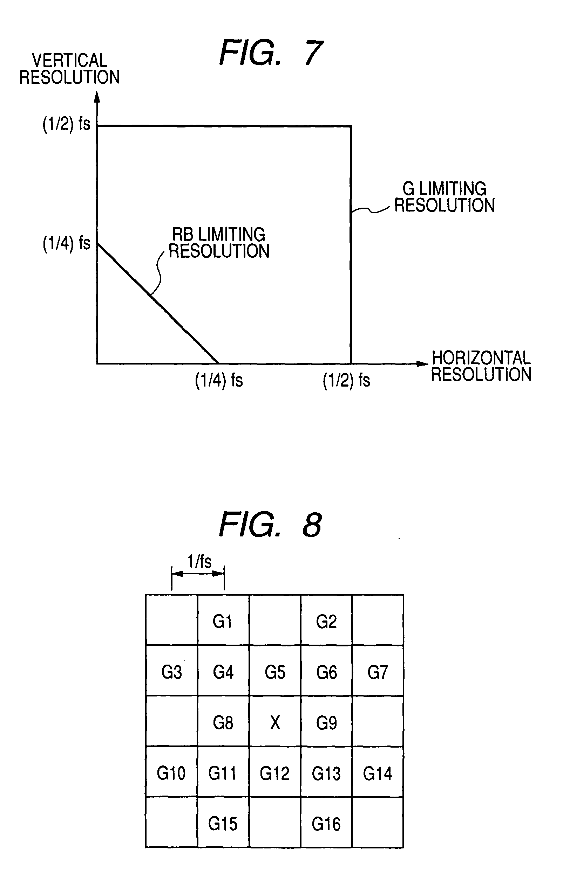

A spatial frequency characteristic in the color coding example shown in Fig. 6 is shown in Fig. 7. The color components G can catch a signal having a frequency up to $(1/2)$ fs in the horizontal and the vertical directions. The color components R and B can catch a signal having a frequency up to $(1/\sqrt{2})$ fs in the oblique 45 degree direction. The color components R and B can catch a signal having a frequency up to $(1/4)$ fs in the horizontal and the vertical direction. The color components G can catch a signal having a frequency up to $(1/4\sqrt{2})$ fs in the oblique 45 degree direction. In other words, as it is evident from a comparison of Figs. 5 and 7, the G limiting resolution is substantially improved from that in the Bayer arrangement by using the color coding example shown in Fig. 6. Thus, resolution of a luminance signal including G signals as main components is about twice as large as that of the Bayer arrangement.

Subsequently, correction processing for the color coding example shown in Fig. 6 will be specifically explained below. A pixel arrangement in which only the color components G in the color coding example shown in Fig. 6 are extracted is shown in Fig. 8.

As shown in the figure, G signals are present in eight pixels G in total in the horizontal, the vertical, and the oblique directions surrounding the interpolation pixel X, that is, pixels G4, G5, G6, G8, G9, G11, G12, and G13. Interpolation processing for the G signal of the interpolation pixel X is performed using these G signals. In the color coding of the Bayer arrangement, the pixels G are only present in the vertical and the horizontal four directions. On the other hand, in the color coding example shown in Fig. 6, the eight pixels are present in the horizontal, the vertical, and the oblique directions. When the interpolation pixel X is observed, it is seen that the pixels G are arranged in a grid pattern. This is very important in realizing high resolution.

In the first embodiment, a correlation between the interpolation pixel X and the pixels around the interpolation pixel X is calculated not only in the horizontal and the vertical directions but also in the oblique directions. The interpolation processing is performed while it is judged which pixels should actually be used for interpolation from a relation between the correlation in the horizontal and the vertical directions and the correlation in the oblique directions.

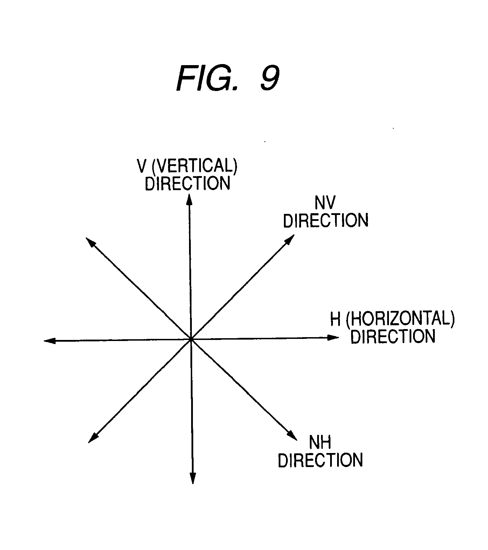

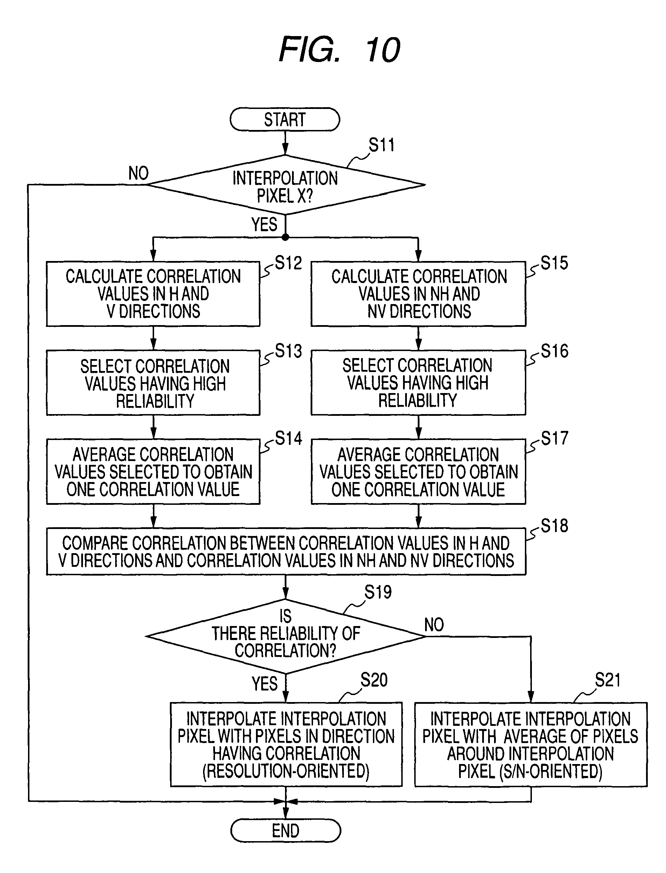

A procedure of the interpolation processing carried out in the interpolation processor 23 is shown in Fig. 10 in a form of a flowchart. In the following description, as shown in Fig. 9, the horizontal direction is described as an H direction, the vertical direction is described as a V direction, an axial direction rotated to the right by 45 degrees with respect to the H direction is described as an NH direction, and an axial direction rotated to the left by 45 degrees with respect to the H direction is described as an NV direction. The interpolation processing will be hereinafter explained in detail with reference to Fig. 10.

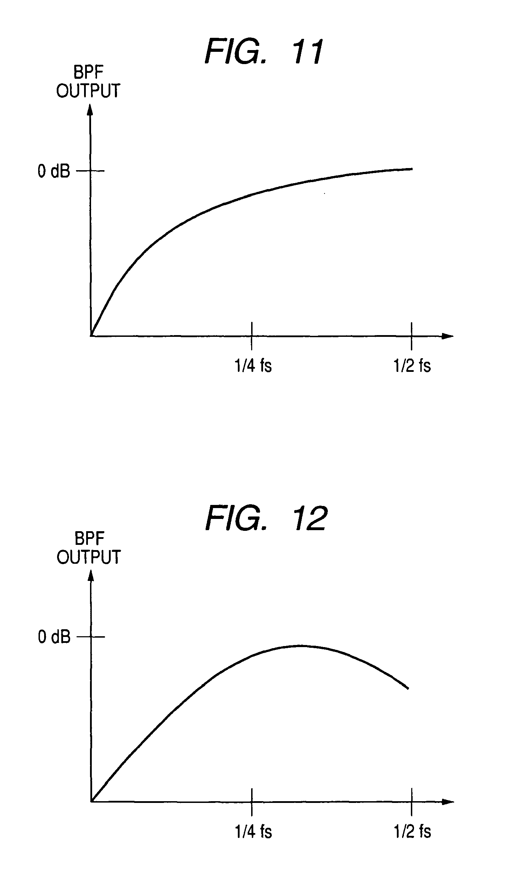

The pixel X in Fig. 8 is set as an interpolation pixel (a pixel to be interpolated) (step S11). First, correlation values in the H and the V directions are calculated for respective pixels around this interpolation pixel X (step S12). Specifically, correlation values in the H and the V directions are calculated by applying filtering by a band-pass filter in the H and the V directions with the pixel G4 on the obliquely upper left of the interpolation pixel X as the center. A frequency characteristic (a filter characteristic) of the band-pass filter in the H and the V directions is shown in Fig. 11.

When an output in the horizontal direction of the band-pass filter is Bpf_H_G4 and an output in the vertical direction of the band-pass filter is Bpf_V_G4, a filtering result represented by the following equations is obtained.

$$\mathrm{Bpf\_H\_G4 = -G3 + 2G4 - G5}$$

$$\mathrm{Bpf\_V\_G4 = -G1 + 2G4 - G8}$$

Subsequently, a correlation value S_H_G4 in the H direction for the pixel G4 is calculated in accordance with the following expression. A correlation value S_H_G4 in the H direction indicates a ratio of filter outputs Bpf_H and Bpf_V in the horizontal and the vertical directions of band-pass filters that have the same filter characteristic.

$$\mathrm{S\_H\_G4 = Bpf\_V / (Bpf\_H + Bpf\_V)}$$

Concerning a correlation value S_V_G4 in the V direction, S_V_G4=1-S_H_G4. If only the correlation value S_H_G4 in the H direction is calculated, it is possible to easily calculate the correlation value S_V_G4. Thus, it is not particularly necessary to calculate the correlation value S_V_G4. This means that, at this point, the correlation values S_H_G4 and S_V_G4 in the H and the V directions with the pixel G4 as the center are calculated. For example, when the correlation value S_H_G4 in the H direction is 1.0 and the correlation value S_V_G4 in the V direction is 0.0, a favorable interpolation result is obtained if the pixel X is interpolated with the correlation value S_V_G4 in the V direction.

In the same manner as the calculation of the correlation value S_H_G4 in the H direction with the pixel G4 on the obliquely upper left of the interpolation pixel X as the center, correlation values S_H_G6, S_H_G11, and S_H_G13 in the H direction with the pixel G6 on the obliquely upper right, the pixel G11 on the obliquely lower left, and the pixel G13 on the obliquely lower right as the centers, respectively, are also calculated.

According to the processing described above, that is, the processing in step S12, the correlation values S_H_G4, S_H_G6, S_H_G11, and S_H_G13 in the H and the V directions with the four pixels G4, G6, G11, and G13 surrounding the interpolation pixel X as the centers are calculated (see Fig. 26).

Subsequently, two correlation values suitable for substituting the interpolation pixel X are selected out of the four correlation values S_H_G4, S_H_G6, S_H_G11, and S_H_G13 calculated. Specifically, two correlation values having a highest correlation among the four correlation values, that is, two correlation values calculated having highest reliability, are adopted as correlation values of the interpolation pixel X (step S13).

As it is seen from Fig. 26, the correlation values S_H_G4, S_H_G6, S_H_G11, and S_H_G13 calculated in step S12 are correlation values in the H and the V directions with the four pixels G4, G6, G11, and G13 around the interpolation pixel X as the centers, respectively, and are not correlation values S_H in the H and the V directions with the desired interpolation pixel X as the center. When there is inconvenience in implementation, for example, it is impossible to form a band-pass filter with the interpolation pixel X as a center, it is impossible to directly calculate a correlation value in the interpolation pixel X. Thus, it is the purpose of step S13 to substitute, on the basis of an idea that correlation values are substantially equal in adjacent pixels, a correlation value in the H and the V directions having high reliability calculated in the adjacent pixels for the correlation value S H in the H and the V directions of the interpolation pixel X.

It is possible to represent reliability for selecting a correlation value using an output value of the band-pass filter calculated in the course of calculating the four correlation values. For example, a correlation reliability value Bpf_ Max of the pixel G4 is calculated from the following expression.

$$Bpf\_Max=|Bpf\_H\_G4|+|Bpf\_V\_G4|$$

This calculation of the correlation reliability value Bpf_Max is applied to four points of the other three pixels G6, G11, and G13. When an output of the band-pass filter for a pixel is large, it can be said that a signal having large amplitude is present around the pixel and the signal is generated by an image rather than by noise. Conversely, when an output of the band-pass filter is small, a signal is buried under noise and reliability of a correlation is low. Thus, it is difficult to trust a correlation value. In other words, when the correlation reliability value Bpf_Max calculated from a sum of absolute values of outputs of band-pass filters in the horizontal and the vertical orthogonal two directions is large, it is possible to estimate that reliability of a correlation value calculated from the outputs of these band-pass filters is high.

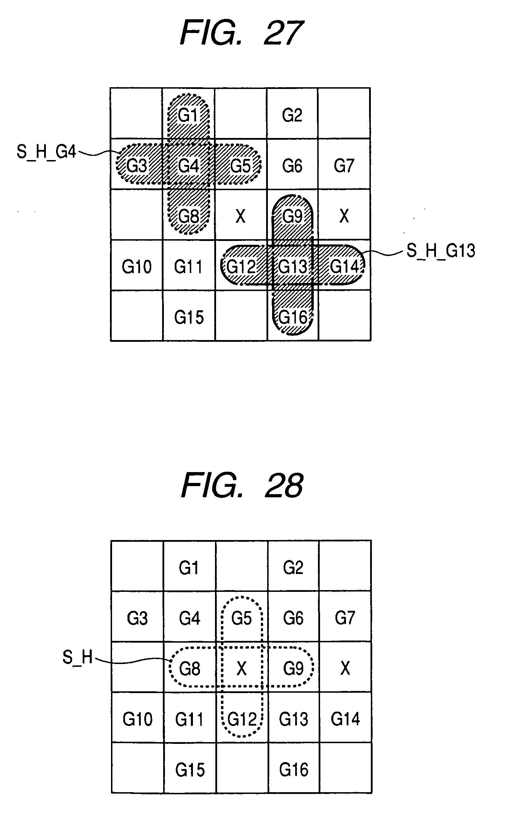

The respective correlation reliability values Bpf_Max calculated in the pixels at the four points around the interpolation pixel X are compared to select pixels at two points having larger values around the interpolation pixel X. Correlation values in the H and the V directions calculated with these pixels at the two points around the interpolation pixel X as the centers are selected as values substituting for the correlation value in the H and the V directions with the interpolation pixel X as the center. A state in which S_H_G4 and S_H_G13 are selected as reliable correlation values is shown in Fig. 27.

In the correlation reliability calculation, correlation values with a large result of |Bpf_H-Bpf_V|, that is, a large difference value of filter outputs may be selected instead of correlation values with a large correlation reliability value Bpf_Max, that is, a large total value of filter outputs. This has an object of adopting correlation values in places with a strong correlation because it can be said that the correlation values have a large difference between the output Bpf_H in the H direction and the output Bpf_V in the V direction of the band-pass filter, that is, a strong correlation in the horizontal and the vertical directions.

Subsequently, the correlation values in the higher order two places adopted are averaged to obtain one correlation value (step S14). The correlation value averaged is treated as a correlation value in the H and the V directions with the interpolation pixel X as the center in the following processing steps. For example, when reliability of correlation values in two places of G4 and G6 is selected because the reliability is high, correlation values in the H and the V directions with these two points as the centers are averaged and regarded as a correlation value in the H and the V directions for the interpolation pixel X (see Fig. 28).

In this case, it is possible to select one correlation value in the horizontal and the vertical directions out of the four correlation values by selecting a correlation value of a pixel at one point having a largest correlation reliability value Bpf_Max around the interpolation pixel X. However, a satisfactory result is obtained by adopting an average of the correlation values in the higher order two places. A method of adopting correlation values in the higher order three places from the four correlation values and calculating an average of the correlation values is also conceivable.

When a band-pass filter with the interpolation pixel X as the center is formed, it is possible to directly calculate a correlation value in the interpolation pixel X rather than an average of correlation values of pixels having high reliability around the interpolation pixel X. Thus, the processing in steps S12 to S14 is simplified.

In parallel to the processing for calculation of a correlation value in the H and the V directions of the interpolation pixel X in steps S12 to S14, processing for calculation of correlation values in the NH and the NV directions of the interpolation pixel X in steps S15 to S17 is executed. The NH direction is an axial direction rotated to the right by 45 degrees with respect to the H direction. The NV direction is an axial direction rotated to the left by 45 degrees with respect to the H direction (as described above) .

First, correlation values in the NH and the NV directions are calculated for respective pixels around the interpolation pixel X (step S15) . Specifically, filtering by the band-pass filter is applied in the oblique directions with the pixel G5 above the interpolation pixel X as the center to calculate correlation values in the NH and the NV directions. A frequency characteristic (a filter characteristic) of the band-pass filters in the NH and the NV directions is shown in Fig. 12.

When an output in the NH direction of the band-pass filter is Bpf_NH_G5 and an output in the NV direction of the band-pass filter is Bpf_NV_G5, a filtering result represented by the following expressions is obtained.

$$Bpf\_NH\_G5 = -G1 + 2G5 - G9$$

$$Bpf\_NV\_G5 = -G2 + 2G5 - G8$$

Subsequently, a correlation value S_NH_G5 in the NH direction for the pixel G5 is calculated from the following expression. A correlation value S_NH_G5 in the NH direction represents a ratio of filter outputs Bpf_NH and Bpf_NV in the NH and the NV directions of band-pass filters having the same filter characteristic.

$$S\_NH\_G5 = Bpf\_NV\_G5 / (Bpf\_NH\_G5 + Bpf\_NV\_G5)$$

Concerning the correlation value S_NV_G5 in the NV direction, S_NV_G5=1-S_NH_G5. Thus, if only the correlation value S_NH_G5 in the NH direction is calculated, it is possible to easily calculate the correlation value S_NV_G5. Thus, it is not particularly necessary to calculate the correlation value S_NV_G5 here. This means that the correlation values S_NH_G5 and S_NV_G5 in the NH and the NV directions with the pixel G5 as the center are calculated at this point. For example, when the correlation value S_NH_G5 in the NH direction is 1.0 and the correlation value S_V_G5 in the NV direction is 0.0, a satisfactory interpolation result is obtained by interpolating the pixel X with the correlation value S_NV_G5 in the NV direction.

As in the case of the calculation of the correlation value S_NH_G5 in the NH direction with the pixel G5 above the interpolation pixel X as the center; correlation values S_NH_G8, S_NH_G9, and S_NH_G12 in the NH direction with the pixel G8 on the left, the pixel G9 on the right, and the pixel G12 below the interpolation pixel X as the centers, respectively, are also calculated.

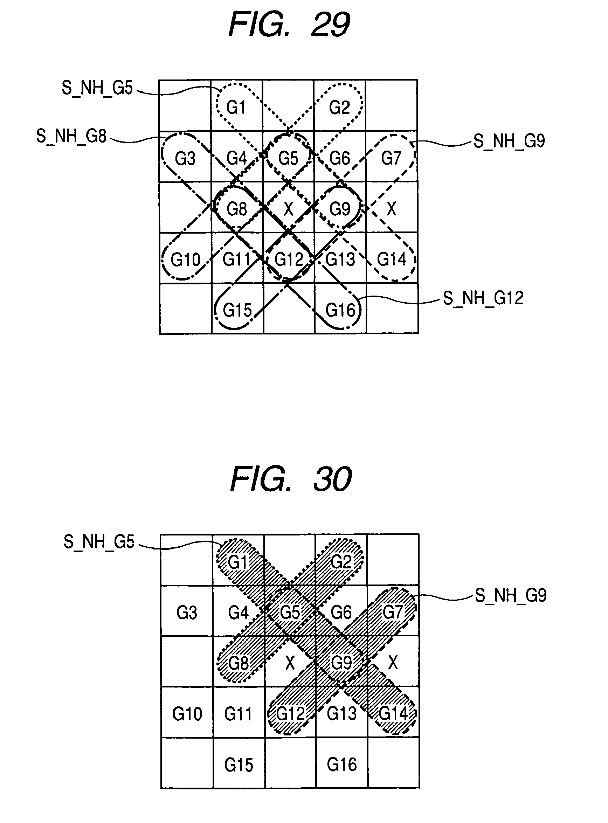

According to the processing described above, that is, the processing in step S15, the correlation values S_NH_G5, S_NH_G8, S_NH_G9, and S_NH_G12 in the NH direction with the four pixels G5, G8, G9, and G12 at the four points above, on the left, on the right, and below the interpolation pixel X as the centers, respectively, are calculated (see Fig. 29).

Subsequently, two correlation values substituted for the interpolation pixel X are selected out of the four correlation values S_NH_G5, S_NH_G8, S_NH_G9, and S_NH_G12 calculated. Specifically, two correlation values having higher reliability among the four correlation values are adopted as correlation values of the interpolation pixel X (step S16).

As it is seen from Fig. 29, the respective correlation values S_NH_G5, S_H_G8, S_H_G9, and S_H_G12 calculated in step S15 are correlation values in the H and the V directions with the four pixels G5, G8, G9, and G12 around the interpolation pixel X as the centers, respectively, and are not correlation values with the desired interpolation pixel X as the center. When there is inconvenience in implementation, for example, it is impossible to form a band-pass filter with the interpolation pixel X as a center, it is impossible to directly calculate a correlation value in the interpolation pixel X. Thus, it is the purpose of step S16 to substitute, on the basis of an idea that correlation values are substantially equal in adjacent pixels, a correlation value in the NH direction having high reliability calculated in the pixels around the interpolation pixel X for the correlation value in the NH direction of the interpolation pixel X.

Reliability for selecting a correlation value is represented using an output value of a band-pass filter calculated in the process for calculating the four correlation values. For example, a correlation reliability value Bpf_Max of the pixel G5 is calculated from the following expression. The correlation reliability value Bpf_Maxis is calculated for the other pixels G8, G9, and G12 at the three points around the interpolation pixel X in the same manner. When the correlation reliability value Bpf_Max calculated from a sum of absolute values of outputs of band-pass filters in the horizontal and the vertical orthogonal two directions is large, it is possible to estimate that reliability of a correlation value calculated from the outputs of these band-pass filters is high (as described above).

$$Bpf\_Max = |Bpf\_NH\_G5| + |Bpf\_NV\_G5|$$

The correlation values in the higher order two places adopted are averaged to obtain one correlation value (step S17) . A state in which S_NH_G5 and S_NH_G9 are selected as reliable correlation values is shown in Fig. 30.

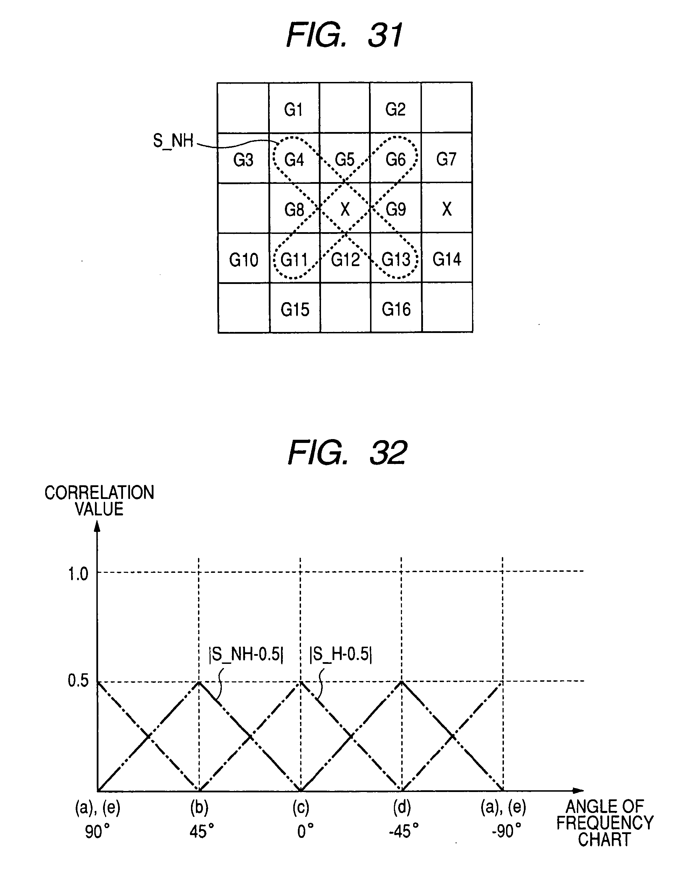

The correlation value averaged is treated as a correlation value in the NH and the NV directions with the interpolation pixel X as the center in the following processing steps. For example, when reliability of correlation values in two places of G5 and G9 is selected because the reliability is high, correlation values in the H and the V directions with these two points as the centers are averaged and regarded as a correlation value in the NH and the NV directions with the interpolation pixel X as the center (see Fig. 31).

When a band-pass filter with the interpolation pixel X is formed, it is possible to directly calculate a correlation value in the interpolation pixel X rather than an average of correlation values of pixels having high reliability around the interpolation pixel X. The processing in steps S15 to S17 is simplified (as described above).

According to the processing described above, a correlation value S_H in the H direction and a correlation value S_NH in the NH direction for the interpolation pixel X are calculated (see Figs. 28 and 31).

Subsequently, on the basis of the respective correlation values S_H and S_NH in the H direction and the NH direction for the interpolation pixel X, a direction of pixels around the interpolation pixel X with which the interpolation pixel X has a strong correlation is judged, that is, directional properties of a correlation are judged (step S18).

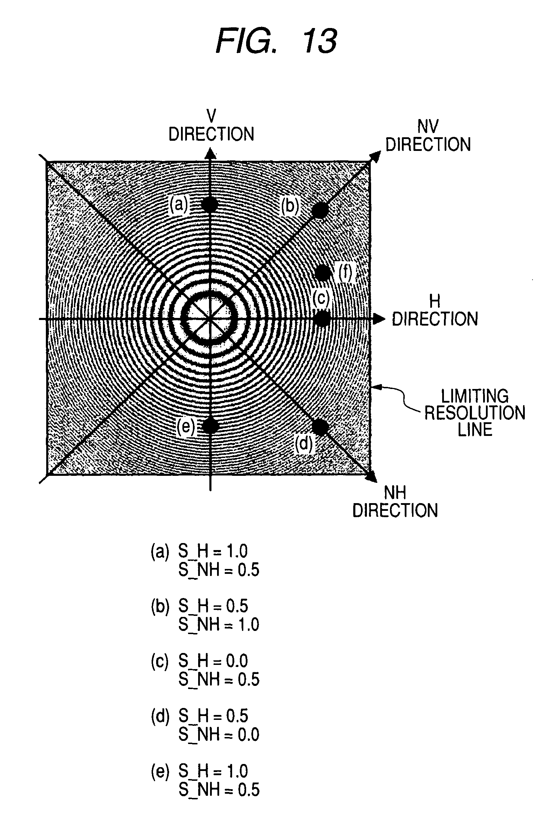

Here, the correlation values S_H and S_NH calculated in the H direction and the NH direction, respectively, for the interpolation pixel X and a degree of correlation between the interpolation pixel X and pixels surrounding the interpolation pixel X will be considered with an input image formed by a resolution chart shown in Fig. 13 as an example. The resolution chart is a chart in which the center indicates a signal having a low frequency and positions farther apart from the center indicate signals having higher frequencies. In the resolution chart, signals having the same frequency have various directions. Therefore, it is possible to analyze what kind of processing is suitable for various signals by inputting signals in the resolution chart into a signal processor.

For example, when signals at an (a) point to an (e) point in Fig. 13 are inputted as the interpolation pixel X and the processing in step S12 to S17 described above is executed, the two correlation values S_H and S_NH at the (a) point are S_H=1. 0 (S_V=0.0) and S_NH=0.5 (S_NV=0.5). It is seen from these correlation values that, in the H and the V directions, the interpolation pixel X has a strong correlation with pixels around the interpolation pixel X in the H direction. It is seen from this that, in the NH and the NV directions, the interpolation pixel X has the same correlation in the NH and the NV directions, or has no correlation with the pixels around the interpolation pixel X in the oblique directions.

At the (b) point, S_H=0.5 (S_V=0.5) and S_NH=1.0 (S_NV=0.0). It is seen from this that, in the H and the V directions, the interpolation pixel X has no correlation with the pixels around the interpolation pixel X but, in the NH and the NV directions, the interpolation pixel X has a strong correlation with the pixels around the interpolation pixel X in the NH direction.

At the (c) point, S_H=0.0 (S_V=1.0), S_NH=0.5 (S_NV=0.5). It is seen from this that, in the H and the V directions, the interpolation pixel X has a strong correlation with the pixels around the interpolation pixel X in the V direction. In the NH and the NV directions, the interpolation pixel X has no correlation in the pixels around the interpolation pixels X.

At the (d) point, S_H=0.5 (S_V=0.5) and S_NH=0.0 (S_NV=1.0). It is seen from this that, in the H and the V directions, the interpolation pixel X has no correlation with the pixels around the interpolation pixel X but, in the NH and the NV directions, the interpolation pixel X has a strong correlation with the pixels around the interpolation pixel X in the NV direction.

At the (e) point, S_H=1.0 (S_V=0.0) and S_NH=0.5 (S_NV=0.5). It is seen from this that, as at the point (a), in the H and the V directions, the interpolation pixel X has a strong correlation with the pixels around the interpolation pixel in the H direction but, in the NH and the NV directions, the interpolation pixel X has no correlation with the pixels around the interpolation pixel X.

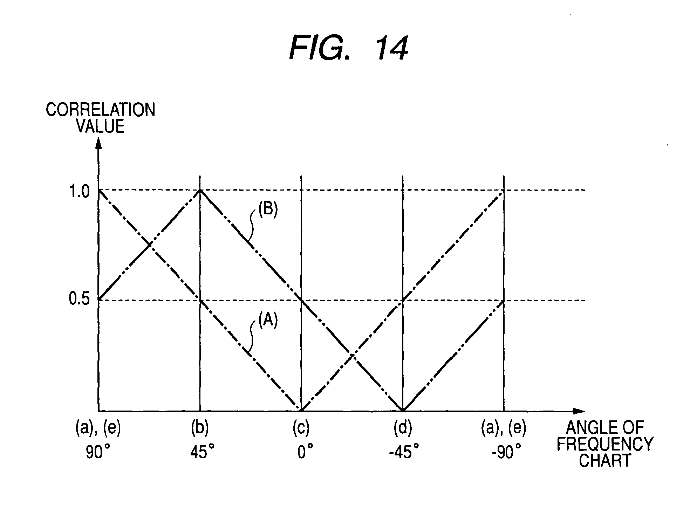

A frequency chart representing a relation of correlation values between a spatial phase of an interpolation pixel in the case in which the resolution chart shown in Fig. 13 is set as an input image and pixels around the interpolation pixels in the H and the V directions and the NH and the NV directions is shown in Fig. 14. In the following explanation, a straight line in the figure representing the relation of correlation values between the interpolation pixel and the pixels around the interpolation pixel in the H and the V directions and the NH and the NV directions is also referred to as a "correlation line". It is possible to obtain this correlation line by calculating at least two patterns of correlation values in different directions and plotting the correlation values of the at least two patterns on straight lines of various angles. In a correlation line diagram in Fig. 14, an alternate long and short dash line (A) is equivalent to the correlation value S_H in the H and the V directions and an alternate long and two short dashes line (B) is equivalent to the correlation value S_NH in the NH and the NV directions. Phases of the correlation lines (A) and (B) are shifted by 45 degrees.

When only the correlation value S_H in the H and the V directions is used, it is possible to specify that the interpolation pixel X has a strong correlation in the H direction or the V direction when S_H is close to 0 or 1. However, it is likely that the interpolation pixel X is present at the (a) point and the (c) point on the resolution chart when S_H takes a value near 0.5. It is impossible to specify directional properties in which the interpolation pixel X has a strong correlation simply by referring to the correlation line (A). On the other hand, even when S_H takes a value near 0.5, it is possible to specify, at high resolution, in which oblique directions the interpolation pixel X has a strong correlation by referring to the correlation line (B) plotted with the correlation value S_NH calculated from outputs of two band-pass filters orthogonal to each other that are rotated by 45 degrees with respect to the horizontal and the vertical axes, that is, in the NH direction rotated to the right by 45 degrees with respect to the H direction and in the NV direction rotated to the left by 45 degrees with respect to the H direction. In other words, by comparing the correlation lines of S_H and S_NH, it is possible to judge, over all directions (360 degrees), a direction in which the interpolation pixel X has a strong correlation with pixels around the interpolation pixel X. In this embodiment, as an example, the two band-pass filters orthogonal to each other rotated by 45 degrees as a predetermined angle are used. However, an angle formed by the H and the V directions and the NH/NV directions may be other angles such as 40 degrees to 50 degrees as long as an effect of the same degree as above is realized.

When the resolution chart shown in Fig. 13 is set as an input image, in step S18, it is possible to find what degree of correlation the interpolation pixel has with the pixels around the interpolation pixel in the H and the V directions and the NH and the NV directions, respectively, that is, directional properties in which a correlation is strong by comparing the correlation values indicated by the alternate long and short dash line (A) and the alternate long and short two dashes line (B) in the special phase in which the interpolation pixel X on the frequency chart shown in Fig. 14 is located.

When directional properties of a correlation of the interpolation pixel X is found in step S18, subsequently, it is judged whether the correlation values S_H and S_NH calculated in steps S12 to S14 and steps S15 to S17 have reliability (step S19).

As described already, in steps S12 to S14 and steps S15 to S17, correlation values in the respective directions with the interpolation pixel X as the center are not directly calculated. Correlation values having high reliability among correlation values in the H direction and the NH direction calculated with the respective pixels surrounding the interpolation pixel X as the center are averaged and substituted for a correlation value of the interpolation pixel X. In such a case, it is particularly important to check reliability of a correlation.

A specific method of checking reliability of a correlation will be explained. The frequency chart in the case in which the resolution chart shown in Fig. 13 is set as an input image, that is, the relation of correlation values between the interpolation pixel and the pixels around the interpolation pixel in the H and the V directions and the NH and the NV directions is as shown in Fig. 14. It is possible to arrange two pairs of band-pass filters orthogonal to each other in the horizontal and the vertical directions and the directions rotated by 45 degrees with respect to the horizontal and the vertical directions, respectively, and calculate the correlation value S_H in the H direction and the correlation value S_NH in the NH direction from outputs of the respective pairs of band-pass filters. Phases of the correlation lines (A) and (B) of S_H and S_NH are shifted by 45 degrees from each other.

In Fig. 32, a correlation line formed by an absolute value calculated by deducting 0.5 from S_H (the correlation line (A) in Fig. 14) and a correlation line formed by an absolute value calculated by deducting 0.5 from S_NH (the correlation line (B) in Fig. 14) are plotted, respectively. As it is seen from the figure, if the correlation values S_H and S_NH are ideal correlation values on the correlation line shown in Fig. 14, that is, correlation values having high reliability, a sum of the absolute value calculated by deducting 0.5 from S_H and the absolute value calculated by deducting 0.5 from S_NH is a value close to 0.5. Thus, it is possible to substitute the correlation values S_H and S_NH calculated in steps S12 to S14 and steps S15 to S17 in a conditional expression including inequalities and judge reliability of the correlation values S_H and S_NH according to whether the condition is satisfied. TH1 and TH2 are values close to 0.5 that satisfy the relation of TH1<TH2 (when TH1 and TH2 are set close to 0.5, the judgment condition is made stricter).

$$\mathrm{TH1} < |\, \mathrm{S\_H} - 0.5\, | + |\, \mathrm{S\_NH} - 0.5\, | < \mathrm{TH2}$$

When it is judged in step S19 that the correlation values S_H and S_NH have reliability, a pixel that interpolates the interpolation pixel X is extracted from the pixels around the interpolation pixel X in the direction in which the interpolation pixel X is judged as having a strong correlation in step S18 and pixel interpolation is performed (step S20).

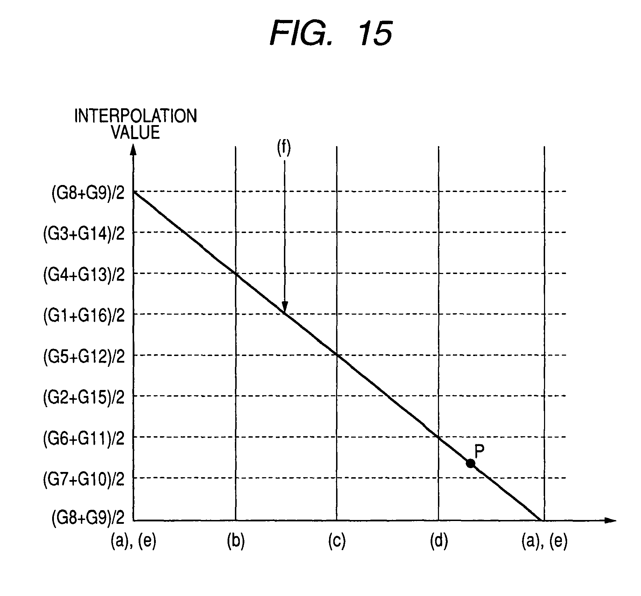

A relation between directional properties of a correlation of the interpolation pixel X and the pixels around the interpolation pixel X used for interpolation is shown in Fig. 15. For example, when it is judged in step S18 that directional properties of the correlation of the interpolation pixel X are at the (a) point (i.e., 90 degrees on the frequency chart), since a correlation in the H direction is strong, the G signal of the interpolation pixel X is interpolated as X=(G8+G9)/2. When directional properties of the correlation of the interpolation pixel X are at the (b) point (i.e., 45° on the frequency chart), since a correlation in the NH direction is strong, the G signal of the interpolation pixel X is interpolated as X=(G4+G13)/2. The same holds true when directional properties of the correlation of the interpolation pixel X take the (c) point, (d) point, and the (e) point.

When directional properties of the correlation of the interpolation pixel X is at an (f) point where a correlation value between the (c) point and the (b) point is calculated, the directional properties indicate S_H≡0.25 and NH≡0.75, the interpolation pixel X is interpolated as X=(G1+G16)/2 using pixels in the direction.

When there is no pixel around the interpolation pixel X that is right on a straight line indicating directional properties of the correlation of the interpolation pixel X, for example, when directional properties of the correlation of the interpolation pixel X is in the middle of the (b) point and the (f) point, linear interpolation is performed. The linear interpolation is based on a relation between a correlation value and an interpolation value for, for example, interpolating the interpolation pixel X by weighting an interpolation value at the (b) point and an interpolation value at the (f) point. For example, although there is no pixel around the interpolation pixel X that is right on a direction equivalent to a P point in Fig. 15, it is possible to calculate a correlation value of the interpolation pixel X according to the following expression for subjecting the interpolation pixel X to linear interpolation using two interpolation values (G6+G11)/2 and (G7+G10)/2 applied in directional properties adjacent to the direction. Here, "a" is a weighting coefficient.

$$X=\{(G6+G11)/2\}\times a+\{(G7+G10)/2\}\times(1-a)$$

In this way, in the first embodiment, rather than calculating directional properties of the correlation of the interpolation pixel X only from the correlation value S_H in the H an the V directions as in the past, the correlation value S_NH calculated from outputs of the two band-pass filters orthogonal to each other rotated by 45 degrees with respect to the horizontal and the vertical axes is also used. When the correlation value S_H in the H and the V directions is exactly 0.5, it is impossible to specify directional properties of the correlation only with S_H. On the other hand, since the correlation value S_NH in the NH and the NV directions is shifted by 45 degrees with respect to S_H (see Fig. 14), it is possible to specify, with high resolution, in which oblique direction the interpolation pixel X has a strong correlation by further referring to S_NH. Therefore, when color coding is performed using the color filters shown in Fig. 6, it is possible to interpolate the G signal with higher accuracy compared with the Bayer arrangement in the past. As a result, it is possible to obtain a luminance signal having high resolution.

On the other hand, when sufficient reliability is not obtained for the correlation values S_H and S_NH calculated in steps S12 to S14 and step S15 to S17 (No in step S19), S/N-oriented interpolation is performed using an average of the pixels around the interpolation pixel X (step S21).

When the two correlation values S_H and S_NH are not on the two correlation straight lines (A) and (B) shown in Fig. 14, it is possible to consider that there is no correlation. For example, when S_H=1.0 and S_NH≡0.5, it can be said that there is a correlation. However, when S_H=1.0 and S_NH≡1.0, since the correlation values S_H and S_NH are not on both the correlation straight lines (A) and (B) in Fig. 14, it can be said that reliability of a correlation is low. In the latter case, a probability of correctly interpolating the interpolation pixel X is low even if the interpolation is performed using pixels in any direction. Conversely, it is highly likely that a false color signal is generated because of wrong interpolation.

When it is found that the correlation values S_H and S_NH calculated in steps S12 to S17 are not on the two correlation straight lines (A) and (B) shown in Fig. 14 and reliability of the correlation values is low, the S/N-oriented interpolation is applied rather than performing resolution-oriented interpolation using pixels around the interpolation pixel X specified on the basis of directional properties of the correlation of the interpolation pixel X. For example, it is possible to improve performance of the imaging apparatus by interpolating the G signal of the interpolation pixel X as X= (G5+G8+G9+G12)/4 using four pixels around the interpolation pixel X.

In the interpolation of the Bayer arrangement described above, it is possible to calculate only the correlation S_H in the H and the V directions on the basis of outputs of the pair of band-pass filters orthogonal to each other arranged in the H and the V directions. Therefore, it is impossible to evaluate reliability of a correlation, for example, it is inevitable to apply interpolation same as that in the case of the H and the V direction to the NH and the NV directions.

On the other hand, in the first embodiment, the color coding for surrounding the RB components with the G components is performed (see Fig. 6). Thus, it is possible to further calculate a correlation in the NH direction on the basis of outputs of the pair of band-pass filters orthogonal to each other arranged in the NH and the NV directions rotated by 45 degrees with respect to the HV direction. Therefore, it is possible to judge, over all directions (360 degrees), a direction in which the interpolation pixel X has a strong correlation with the pixels around the interpolation pixel X. In the interpolation processing, it is possible to cope with interpolation in the oblique directions.

As it is evident from the comparison of the limiting resolutions of the image signals shown in Figs. 5 and 7, respectively, according to the color coding in the first embodiment, concerning resolution of G, in the oblique 45 degree direction, it is possible to obtain resolution twice as large as that of the Bayer arrangement.

A processing method is adaptively changed according to reliability. For example, reliability of a correlation is evaluated in step S19 and, when the correlation is reliable, resolution-oriented interpolation is performed from a direction of the correlation. However, when the correlation is not reliable, S/N-oriented interpolation is performed. Thus, it is possible to realize accurate interpolation processing.

For example, in the artificial resolution chart shown in Fig. 13, basically, high reliability of a correlation is outputted in all the areas. On the other hand, a situation in which reliability of a correlation is low could occur in a subject mixed with complicated curves such as a gravel road and bushes in a general image. In this case, the resolution-oriented interpolation only has to be adaptively changed to the S/N-oriented interpolation.

It is possible to design and manufacture a dedicated hardware device for executing the series of interpolation processing according to the first embodiment. However, it is also possible to execute the same interpolation processing according to software processing for executing a predetermined computer program on a computer.

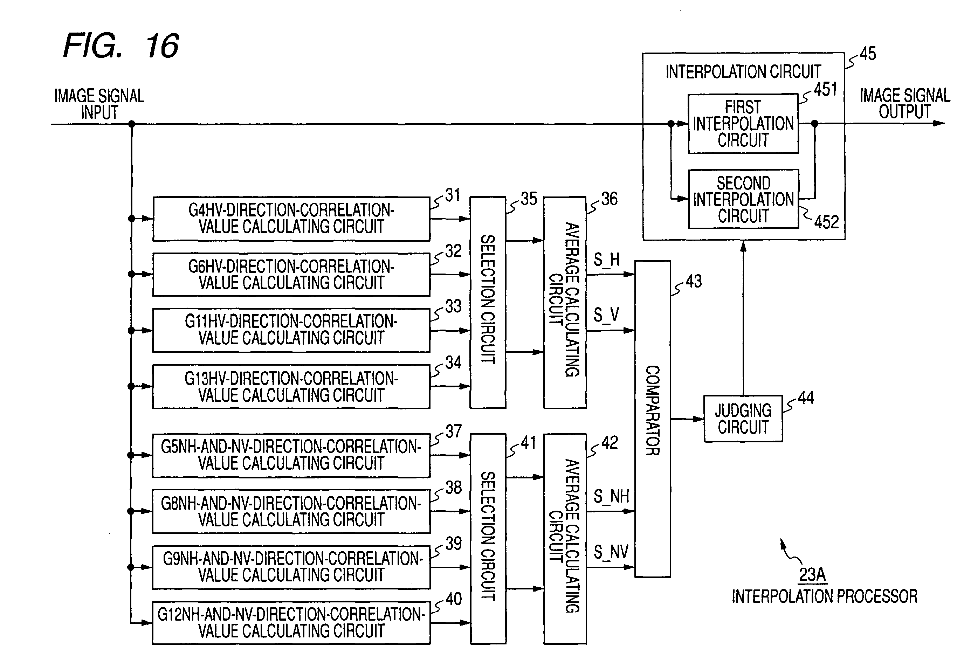

An example of a structure of an interpolation processor 23A of a hardware configuration that executes the interpolation processing according to the first embodiment is shown in Fig. 16.

A G4HV-direction-correlation-value calculating circuit 31 calculates a correlation value in the H and the V directions by applying filtering processing to the H and the V directions with the pixel G4 on the obliquely upper left of the interpolation pixel X as the center. For example, it is possible to constitute the G4HV-direction-correlation-value calculating circuit 31 using a band-pass filter that has the frequency characteristic shown in Fig. 11. Specifically, the G4HV-direction-correlation-value calculating circuit 31 calculates a correlation value S_H_G4 in the H direction for the pixel G4 from the following expression.

$$S\_H\_G4=Bpf\_V/(Bpf\_H+Bpf\_V)$$

The G4HV-direction-correlation-value calculating circuit 31 further calculates a correlation value S_V_G4 in the V direction from the following expression.

$$S\_V\_G4=1-S\_H\_G4$$

Concerning the other pixels G6, G11, and G13 surrounding the interpolation pixel X, in the same manner as the G4HV-direction-correlation-value calculating circuit 31, respective HV-direction-correlation-value calculating circuits 32, 33, and 34 calculate correlation values S_H_G6, S_H_G11, and S_H_G13 in the H direction and correlation values S_V_G6, S_V_G11, and S_V_G13 in the V direction with the pixel G6 on the obliquely upper right, the pixel G11 on the obliquely lower left, and the pixel G13 on the obliquely lower right of the interpolation pixel X as the centers, respectively. Processing equivalent to step S12 of the flowchart shown in Fig. 10 is realized by the respective correlation-value calculating circuits 31 to 35.

A selection circuit 35 selects, for each of the H direction and the V direction, a correlation value applied to the interpolation pixel X out of four correlation values. Specifically, the selection circuit 35 compares output values of the band-pass filter calculated in the course of calculating correlation values in the respective correlation-value calculating circuits 31 to 34 and adopts two correlation values having a largest correlation reliability value Bpf_Max, that is, two correlation values having highest reliability, as correlation values of the interpolation pixel X out of the four correlation values. Processing equivalent to step S13 of the flowchart shown in Fig. 10 is realized by the selection circuit 35.

An average calculating circuit 36 calculates an average of the correlation values in the higher order two places selected by the selection circuit 35 and outputs the average as one correlation value S_H and S_V from the H and the V directions, respectively. Processing equivalent to step S14 of the flowchart shown in Fig. 10 is realized by the average calculating circuit 36.

A G5NH-and-NV-direction-correlation-value calculating circuit 37 calculates correlation values in the NH and the NV directions by applying filtering processing to the NH and the NV directions orthogonal to each other with the pixel G5 above the interpolation pixel X as the center. For example, it is possible to constitute the GSNH-and-NV-direction-correlation-value calculating circuit 37 using a band-pass filter that has the frequency characteristic shown in Fig. 12. Specifically, the GSNH-and-NV-direction-correlation-value calculating circuit 37 calculates a correlation value S_NH_G5 in the NH direction for the pixel G5 from the following expression.

$$S\_NH\_G5=Bpf\_NV\_G5/(Bpf\_NH\_G5+Bpf\_NV\_G5)$$

The G5NH-and-NV-direction-correlation-value calculating circuit 37 calculates a correlation value S_NV_G5 in the NV direction from the following expression.

$$S\_NV\_G5 = 1 - S\_NH\_G5$$

Concerning the other pixels G8, G9, and G12 surrounding the interpolation pixel X, in the same manner as the GSNH-and-NV-direction-correlation-value calculating circuit 37, respective NH-and-NV-direction-correlation-value calculating circuits 38, 39, and 40 calculate correlation values S_NH_G8, S_NH_G9, and S_NH_G12 in the NH direction and correlation values S_NV_G8, S_NV_G9, and S_NV_G12 in the NV direction with the pixel G8 on the left, the pixel G9 on the right, and the pixel G12 below the interpolation pixel X as the centers, respectively. Processing equivalent to step S15 of the flowchart shown in Fig. 10 is realized by the respective correlation-value calculating circuits 37 to 40.

A selection circuit 41 selects, for each of the NH direction and the NV direction, a correlation value applied to the interpolation pixel X out of four correlation values. Specifically, the selection circuit 41 compares output values of the band-pass filter calculated in the course of calculating the four correlation values and adopts two correction values having a largest correlation reliability value Bpf_Max, that is, two correlation values having highest reliability among the four correlation values as correlation values of the interpolation pixel X. Processing equivalent to step S16 of the flowchart shown in Fig. 10 is realized by the selection circuit 41.

An average calculating circuit 42 calculates an average of the correlation values in the higher order two places selected by the selection circuit 41 and outputs the average as one correlation value S_NH and S_NV from the NH and the NV directions; respectively. Processing equivalent to step S17 of the flowchart shown in Fig. 10 is realized by the average calculating circuit 42.

A comparator 43 calculates directional properties with a strong correlation of the interpolation pixel X, or calculates in which direction the interpolation pixel X has a strong correlation with the pixels around the interpolation pixel X. Specifically, the comparator 43 specifies directional properties of a correlation by comparing one correlation value S_H and S_V in each of the H and the V directions calculated by the average calculating circuit 36 and the correlation values S_NH and S_NV in each of the NH and the NV directions calculated by the average calculating circuit 42 with the correlation line diagram in Fig. 14. Processing equivalent to step S18 of the flowchart shown in Fig. 10 is realized by the comparator 43.

A judging circuit 44 judges, concerning a result of the calculation by comparator 43, that is, directional properties with a strong correlation, whether there is reliability of the correlation. Specifically, when the two correlation values S_H and S_NH calculated by the average calculating circuits 36 and 42, respectively, are on the two correlation straight lines (A) and (B) shown in Fig. 14, the judging circuit 44 considers that there is a correlation. When these two correlation values S_H and S_NH are not on the two correlation straight lines (A) and (B), the judging circuit 44 considers that there is no correlation. A result of the judgment by the judging circuit 44 is supplied to an interpolation circuit 45. Processing equivalent to step S19 of the flowchart shown in Fig. 10 is realized by the judging circuit 44.

The interpolation circuit 45 includes a first interpolation circuit 451 that applies resolution-oriented interpolation processing to the interpolation pixel X and a second interpolation circuit 452 that applies S/N-oriented interpolation processing to the interpolation pixel X. The interpolation circuit 45 adaptively entrusts one of the interpolation circuits 451 and 452 with interpolation processing according to reliability of a correlation supplied from the judging circuit.

The first interpolation circuit 451 interpolates the interpolation pixel X using pixels in a direction having correlation according to a judgment result that reliability of a correlation is high from the judging circuit 44. The interpolation processing performed using pixels in a direction in which there is a correlation is the resolution-oriented interpolation processing. Processing equivalent to step S20 of the flowchart shown in Fig. 10 is realized by the first interpolation circuit 451.

On the other hand, the second interpolation circuit 452 interpolates the interpolation pixel X using an average of pixels around the interpolation pixel X according to a judgment result that reliability of a correlation is low from the judging circuit 44. For example, the second interpolation circuit 452 interpolates the interpolation pixel X in accordance with the following expression using image signals of four near pixels around the interpolation pixel X. The interpolation processing performed using an average of pixels around the interpolation pixel X in this way is the S/N-oriented interpolation processing. Processing equivalent to step S21 of the flowchart shown in Fig. 10 is realized by the second interpolation circuit 452.

$$X = (G5 + G8 + G9 + G12) / 4$$

As described already, the respective HV-direction-correlation-value calculating circuits 31 to 34 and the respective NH-and-NV-direction-correlation-value calculating circuits 37 to 40 are constituted using the band-pass filter. However, a component constituting the correlation value calculating circuits is not limited to the band-pass filter. For example, it is also possible to constitute these correlation value calculating circuits using a high-pass filter such as a differential filter. Alternatively, it is also possible to constitute the correlation value calculating circuits as high-pass filters by combining a low-pass filter and an inverter that inverts an output of the low-pass filter.

In the color coding shown in Fig. 6, G serving as a main component in creating a luminance component is arranged in eight pixels in the horizontal, the vertical, and the oblique directions with respect to the interpolation pixel X, that is, the pixels G4, G5, G6, G8, G9, G11, G12, and G13 to realize high luminance resolution compared with the Bayer arrangement in the past. As explained above, according to the interpolation processing according to the first embodiment, plural correlation values are calculated for a solid-state imaging device that has filters for such color coding and compared with a correlation line diagram. This makes it possible to judge correlation properties for all directions (360°). In other words, it is possible to more highly accurately subject a G signal to interpolation processing with respect to the color coding shown in Fig. 6 and obtain a luminance signal having high resolution compared with that of the Bayer arrangement in the past.

In particular, in the first embodiment, as explained with reference to Fig. 32, according to comparison of the plural correlation values and the correlation line diagram, a method for interpolation is changed depending on whether reliability of a correlation is high or low. When it is judged that reliability of a correlation is high, the resolution-oriented interpolation is performed using information on pixels in a direction in which reliability of a correlation is high. When it is judged that reliability of a correlation is low, the S/N-oriented interpolation is performed using a value obtained by averaging information on pixels around the correction pixel. This makes it possible to realize high-performance interpolation processing with higher resolution and resistive to S/N.

[Second Embodiment]

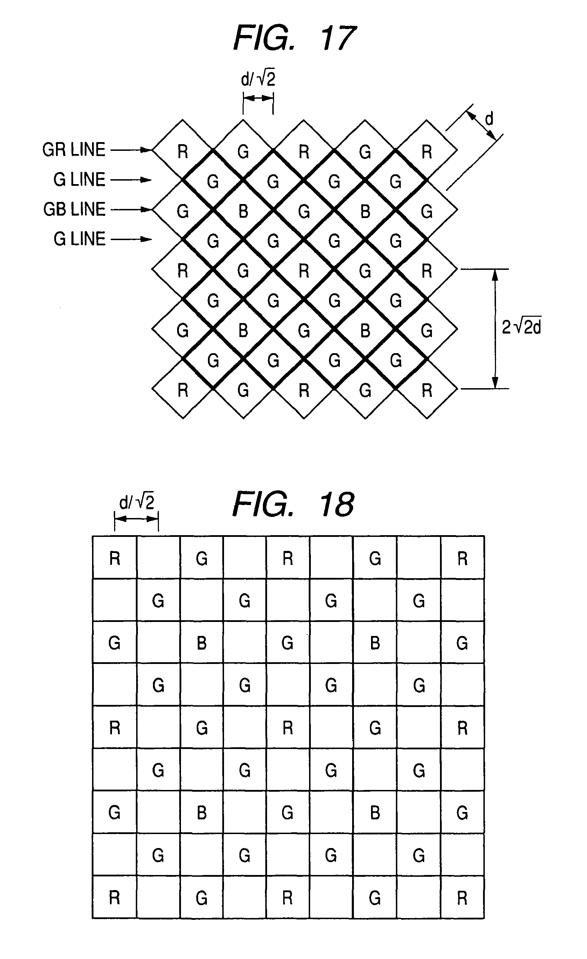

A color coding example to be subjected to interpolation processing according to a second embodiment of the invention is shown in Fig. 17. In color coding shown in the figure, in a so-called oblique pixel arrangement, respective pixel pitches in the horizontal and the vertical directions are set to $\sqrt{2}d$ and respective pixels are shifted by 1/2 of the pixel pitches $\sqrt{2}d$ for each row and each column (pixels are shifted by 1/2 of the pixel pitches in the horizontal direction in odd number rows and even number rows and shifted by 1/2 of the pixel pitches in the vertical directions in odd number columns and even number columns). With respect to the oblique pixel arrangement, a first row is a GR line in which G and R are alternately arranged, a second row is a G line in which only G is arranged, a third row is a GB line in which B and G are alternately arranged, and a fourth row is a G line in which only G is arranged. In the following rows, pixels are repeatedly arranged with these four rows as a unit.

In the color coding example shown in Fig. 17, color components (in this example, G) serving as main components in creating a luminance (Y) component and other color components (in this example, R and B) are arranged such that the color components G surround the color components R and B. R and B are arranged at intervals of $2\sqrt{2}d$ in the horizontal and the vertical directions. This color coding is exactly color coding in which the color arrangement in the color coding example shown in Fig. 6 is inclined 45 degrees.

When sampling rates in the color coding example shown in Fig. 17 are considered in the horizontal and the vertical directions, a sampling rate for G is $d/\sqrt{2}$ and a sampling rate for R and B is $2\sqrt{2}d$. In other words, R and B are arranged in every other column (in this embodiment, odd number columns) and every other row (in this embodiment, odd number rows) such that sampling rates in the horizontal and the vertical directions are rates that are 1/4 of the sampling rate for G. Therefore, resolution in the horizontal and the vertical directions of G is four times as large as that of the color components R and B. Considering a sampling rate in the oblique 45 degree direction, a sampling rate for G is d and a sampling rate for R and B is 2d.

Here, a spatial frequency characteristic will be considered. In the horizontal and the vertical directions, since the sampling rate for G is $d\sqrt{2}$, it is possible to catch a G signal having a frequency up to $(1/\sqrt{2})$ fs according to the sampling theorem. In the oblique 45 degree direction, since the sampling rate for G is d, it is possible to catch a G signal having a frequency up to (1/4) fs according to the sampling theorem.

The color components R and B will be considered in the same manner. However, since intervals of pixel arrangement of R and B are the same, only R will be described here. Concerning a spatial frequency characteristic of R, in the horizontal and the vertical directions, since the sampling rate for R is $2\sqrt{2}d$, it is possible to catch an R signal having a frequency up to $(1/4\sqrt{2})$ fs according to the sampling theorem. In the oblique 45 degree direction, since the sampling rate for R is 2d, it is possible to catch an R signal having a frequency up to (1/2) fs according to the sampling theorem.

Incidentally, a solid-state imaging device that has the oblique pixel arrangement can obtain high resolution because pixel pitches are narrow compared with the pixel arrangement of the square lattice shape. When resolution is the same as resolution of the pixel arrangement of the square lattice shape, it is possible to arrange pixels at pixel pitches wider than the pixel pitches of the pixel arrangement of the square lattice shape. Thus, it is possible to form openings of the pixels wide. As a result, it is possible to improve S/N.

Concerning details of the color coding shown in Fig. 17, see, for example, paragraphs 0055 to 0072 of the specification of Japanese patent application No. 2005-107037 already assigned to the applicant.

The second embodiment is characterized by interpolation processing for the color coding example shown in Fig. 17. The interpolation processing will be hereinafter specifically explained.

Fig. 18 is a diagram representing the color coding example shown in Fig. 17 as a square lattice. It is seen that the arrangement of G in the color coding example shown in Fig. 6 and an arrangement of G in Fig. 18 are in a relation in which the one arrangement is rotated from the other arrangement by 45 degrees. Consequently, it could be seen that it is possible to accurately interpolate G pixels in spatial positions of R and B pixels by performing the interpolation processing according to the first embodiment in a positional relation rotated by 45 degrees with respect to the color coding example shown in Fig. 17.

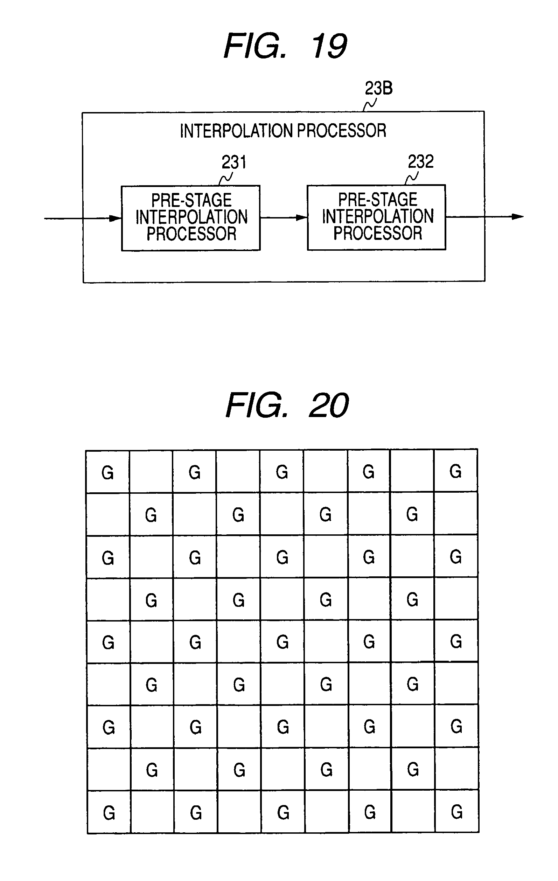

An example of a structure of an interpolation processor 23B that executes the interpolation processing according to the second embodiment is shown in Fig. 19. As shown in the figure, the interpolation processor 23B according to this embodiment has a two-stage structure including a pre-stage interpolation processor 231 and a post-stage interpolation processor 232.

The pre-stage interpolation processor 231 basically performs interpolation processing in the same manner as the first embodiment. Consequently, the pre-stage interpolation processor 231 can interpolate G pixels in spatial positions of R and B pixels in the pixel arrangement of G in Fig. 18. A result of the interpolation processing by the pre-stage interpolation processor 231, that is, a result of interpolating the G pixels in the spatial positions of the R and B pixels in the pixel arrangement of G in Fig. 18 is shown in Fig. 20. A G arrangement in Fig. 20 is accurately interpolated according to this interpolation processing. When attention is paid to the arrangement of G in Fig. 20, it is seen that G is arranged in a checkered pattern.

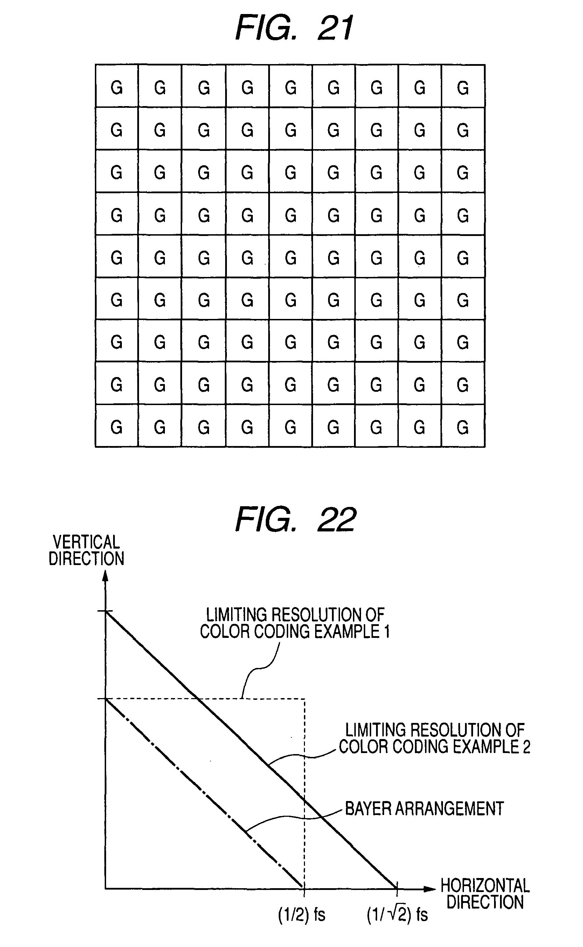

The post-stage interpolation processor 232 basically performs interpolation processing in the same procedure as the interpolation processing for the Bayer arrangement described above to apply interpolation processing to a pixel arrangement of G in Fig. 20. According to this interpolation processing for the Bayer arrangement, G is generated for all the pixels from G arranged in the checkered pattern. A result of the interpolation processing by the post-stage interpolation processor 232, that is, a result of interpolating G arranged in the checkered pattern to generate G for all pixels is shown in Fig. 21.

As described above, for the color coding example shown in Fig. 17, it is also possible to obtain resolution of G up to limiting resolution by combining the interpolation processing by the pre-stage interpolation processor 231, that is, the interpolation processing according to the first embodiment, and the interpolation processing by the post-stage interpolation processor 232, that is, the interpolation processing for the Bayer arrangement.

Spatial resolution characteristics in the Bayer arrangement, the color coding shown in Fig. 6, and the color coding shown in Fig. 17 are shown in Fig. 22. When resolution of the color coding shown in Fig. 6 and resolution of the color coding shown in Fig. 17 are compared, the resolution of the color coding shown in Fig. 17 is more advantageous in the horizontal and the vertical directions. In general, in photographing a subject with a camera, images including linear components are often distributed in the horizontal and the vertical directions. From this viewpoint, it can be said that the color coding shown in Fig. 17 is more advantageous than the color coding shown in Fig. 8.

Considering that it is necessary to output an image signal in a square lattice shape as an output of the camera signal processor 14 (see Fig. 1), the color coding shown in Fig. 17 has an advantage that it is possible to set an output size twice as large as the number of pixels. It goes without saying that it is seen from Fig. 22 that the resolution is remarkably high compared with that of the Bayer arrangement.

In the camera signal processor 14, it is possible to obtain the operational effects described above by using the interpolation processor 23B in the second embodiment directly as the interpolation processor 23. It is also possible to adopt a structure like an interpolation processor 23B' shown in Fig. 23 formed by modifying the interpolation processor 23B.

In the interpolation processor 23B' shown in Fig. 23, a changeover switch 233 is provided on an input side of the post-stage interpolation processor 232 to make it possible to selectively input one of an output signal of the pre-stage interpolation processor 231 and an output signal of the WB circuit 22 (see Fig. 1) (an input signal of the pre-stage interpolation processor 231) to the post-stage interpolation processor 232. By adopting such a structure, it is possible to cope with solid-state imaging devices of two types, namely, the color coding shown in Fig. 17 and the Bayer arrangement, using one camera system.

Industrial Applicability

The invention has been explained in detail with reference to the specific embodiments. However, it is obvious that those skilled in the art can perform modification and substitution of the embodiments without departing from the spirit of the invention.

The invention can be suitably applied, in particular, to processing for applying color filter arrangement interpolation of main components for calculating a luminance component to an image signal to which color coding is applied. The color coding uses color filters that have color components serving as main components in calculating a luminance component arranged to surround each of other color components with respect to a pixel arrangement in which respective pixels are arranged in a square lattice shape at equal intervals in the horizontal direction and the vertical direction. However, the gist of the invention is not limited to specific color coding.

In the embodiments mainly explained in this specification, the two color coding examples shown in Figs. 8 and 17 are used as color coding in which each of R and B is surrounded by G serving as a main component in creating a luminance component. However, color coding to which the invention is applicable is not limited to these two color coding examples. For example, it is also possible to apply the interpolation processing according to the invention even to, for example, color coding in which, with respect to a pixel arrangement of a square lattice shape, pixels are arranged in repetition of RGGG with four pixels in the horizontal direction as a unit a the first row, only G pixels are arranged in a second row, pixels are arranged in repetition of GGBG with four pixels in the horizontal direction as a unit in a third row, only G pixels are arranged in a fourth row, and, in the following rows, pixels are arranged with the four rows as a unit.

In this specification, the explanation has been made with attention paid to the interpolation processing for a G signal for realizing high resolution for a luminance signal. However, it is also possible to apply interpolation processing same as that for G to R and B or other colors, for example, cyan and yellow.

In short, the invention has been disclosed in a form of illustration. The contents described in this specification should not be limitedly interpreted. In order to judge the gist of the invention, description of claims should be taken into account.

## Claims

1.  An image processing device that processes an image imaged by imaging means that has color filters for color coding, the image processing device **characterized by** comprising:

    means for inputting an image signal;
    correlation-value calculating means for calculating, for the image signal, at least a first correlation value and a second correlation value indicating a degree of correlation among pixels;
    interpolation-pixel specifying means for specifying, on the basis of the first correlation value and the second correlation value, other pixels used in interpolating a desired pixel; and
    interpolating means for interpolating the desired pixel from the pixel specified by the interpolation-pixel specifying means.

2.  An image processing device according to claim 1, **characterized in that** the correlation-value calculating means calculates the first correlation value on the basis of outputs of two filters orthogonal to each other and calculates the second correlation value on the basis of outputs of two filters orthogonal to each other that have a directional characteristic different from that in calculating the first correlationvalue.

3.  An image processing device according to claim 2, **characterized in that** the correlation-value calculating means uses, in the calculation of the second correlation value, a filter that has a directional characteristic shifted by a predetermined angle from a filter used for the calculation of the first correlation value.

4.  An image processing device according to claim 2, **characterized in that** the interpolation-pixel specifying means specifies, by comparing a correlation between the first correlation value and the second correlation value, the other pixels used in interpolating the desired pixel on the basis of correlation properties at 360 degrees around the desired pixel to be interpolated.

5.  An image processing device according to claim 1, **characterized in that** color components serving as main components in calculating a luminance component are arranged on the color filters for color coding to surround each of other color components with respect to a pixel arrangement in which respective pixels are arranged in a square lattice shape at equal intervals in a horizontal direction and a vertical direction.

6.  An image processing device according to claim 1, **characterized in that** color components serving as main components in calculating a luminance component are arranged on the color filters for color coding to surround each of other color components with respect to an oblique pixel arrangement in which respective pixels are shifted by 1/2 of a pixel pitch for each row and for each column.

7. An image processing device according to claim 1, **characterized by** comprising:

   pre-stage interpolation processing means for changing color coding for the oblique pixel arrangement to color coding of a Bayer arrangement according to interpolation processing; and
   post-stage interpolation processing means for applying Bayer interpolation processing that uses interpolation to the color coding of the Bayer arrangement.

8. An image processing device that processes an image imaged by imaging means that has color filters for color coding, the image processing device **characterized by** comprising:

   means for inputting an image signal;
   correlation-value calculating means for calculating, for the image signal, at least a first correlation value and a second correlation value indicating a degree of correlation among pixels;
   reliability calculating means for calculating reliability concerning the respective correlation values calculated by the correlation-value calculating means; and
   interpolating means for interpolating a desired pixel in interpolation processing corresponding to the reliability.

9. An image processing device according to claim 8, **characterized in that** the reliability calculating means calculates reliability on the basis of a sum of the respective correlation values calculated by the correlation-value calculating means.

10. An image processing device according to claim 8, **characterized in that**, when the reliability is outside a predetermined range, the interpolating means performs interpolation using an average of information on pixels around the desired pixel to be interpolated.

11. An image processing device according to claim 8, **characterized in that**, when the reliability is within a predetermined range, the interpolating means specifies, on the basis of the first correlation value and the second correlation value, a pixel used for interpolation out of pixels around the desired pixel to be interpolated and performs interpolation using the pixel specified.

12. An image processing method of processing an image imaged by imaging means that has color filters for color coding, the image processing method **characterized by** comprising:

   a correlation-value calculating step of calculating, for an image signal imaged by imaging means, at least a first correlation value and a second correlation value indicating a degree of correlation among pixels;
   an interpolation-pixel specifying step of specifying, on the basis of the first correlation value and the second correlation value, other pixels used in interpolating a desired pixel; and
   an interpolating step of interpolating the desired pixel from the pixel specified in the interpolation-pixel specifying step.

13. An image processing method according to claim 12, **characterized in that**, in the correlation-value calculating step, the first correlation value is calculated on the basis of outputs of two filters orthogonal to each other and the second coefficient value is calculated on the basis of outputs of two filters orthogonal to each other that have a directional characteristic different from that in calculating the first correlation value.

14. An image processing method according to claim 13, **characterized in that**, in the correlation-value calculating step, in the calculation of the second correlation value, a filter that has a directional characteristic shifted by a predetermined angle from a filter used for the calculation of the first correlation value is applied.

15. An image processing method according to claim 13, **characterized in that**, in the interpolation-pixel specifying step, by comparing a correlation between the first correlation value and the second correlation value, the other pixels used in interpolating the desired pixel is specified on the basis of correlation properties at 360 degrees around the desired pixel to be interpolated.

16. An image processing method according to claim 12, **characterized in that** the respective steps are carried out for an image signal to which color coding is applied by color filters on which color components serving as main components in calculating a luminance component are arranged to surround each of other color components with respect to a pixel arrangement in which respective pixels are arranged in a square lattice shape at equal intervals in a horizontal direction and a vertical direction, and color filter arrangement interpolation for the color components serving as main components in calculating a luminance component is performed.

17. An image processing method according to claim 12, **characterized in that** the respective steps are carried out for an image signal to which color coding is applied by color filters on which color components serving as main components in calculating a luminance component are arranged to surround each of other color components with respect to an oblique pixel arrangement in which respective pixels are shifted by 1/2 of a pixel pitch for each row and for each column, and color filter arrangement interpolation for the color components serving as main components in calculating a luminance component is performed.

18. An image processing method according to claim 12, **characterized by** comprising:

a pre-stage interpolation processing step of changing color coding for the oblique pixel arrangement to color coding of a Bayer arrangement according to interpolation processing; and
a post-stage interpolation processing step of applying Bayer interpolation processing that uses interpolation to the color coding of the Bayer arrangement.

19. An image processing method of processing an image imaged by imaging means that has color filters for color coding, the image processing method **characterized by** comprising:

a correlation-value calculating step of calculating, for an image signal imaged by the imaging means, at least a first correlation value and a second correlation value indicating a degree of correlation among pixels;
a reliability calculating step of calculating reliability concerning the respective correlation values calculated in the correlation-value calculating step; and
an interpolating step of interpolating a desired pixel in interpolation processing corresponding to the reliability.

20. An image processing method according to claim 19, **characterized in that**, in the reliability calculating step, reliability is calculated on the basis of a sum of the respective correlation values calculated in the correlation-value calculating step.

21. An image processing method according to claim 19, **characterized in that**, in the interpolating step, when the reliability is outside a predetermined range, interpolation is performed using an average of information on pixels around the desired pixel to be interpolated.

22. An image processing method according to claim 19, **characterized in that**, in the interpolating step, when the reliability is within a predetermined range, a pixel used for interpolation out of pixels around the desired pixel to be interpolated is specified on the basis of the first correlation value and the second correlation value and interpolation is performed using the pixel specified.

23. An imaging apparatus **characterized by** comprising:

imaging means that have color filters for color coding;
correlation-value calculating means for calculating, for an image signal imaged by the imaging means, at least a first correlation value and a second correlation value indicating a degree of correlation among pixels;
interpolation-pixel specifying means for specifying, on the basis of the first correlation value and the second correlation value, other pixels used in interpolating a desired pixel;
interpolating means for interpolating the desired pixel from the pixel specified by the interpolation-pixel specifying means; and
signal processing means for applying color space separation or other signal processing to image information with the pixel interpolated by the interpolating means.

24. An imaging apparatus **characterized by** comprising:

imaging means that have color filters for color coding;
correlation-value calculating means for calculating, for an image signal imaged by the imaging means, at least a first correlation value and a second correlation value indicating a degree of correlation among pixels;

reliability calculating means for calculating reliability concerning the respective correlation values calculated by the correlation-value calculating means;

interpolating means for interpolating a desired pixel in interpolation processing corresponding to the reliability; and

signal processing means for applying color space separation or other signal processing to image information with the pixel interpolated by the interpolating means.

**25.** A computer program described in a computer-readable format to execute, on a computer, processing for an image imaged by imaging means that has color filters for color coding, the computer program **characterized by** causing the computer to execute:

a correlation-value calculating procedure for calculating, for an image signal imaged by the imaging means, at least a first correlation value and a second correlation value indicating a degree of correlation among pixels;

an interpolation-pixel specifying procedure for specifying, on the basis of the first correlation value and the second correlation value, other pixels used in interpolating a desired pixel; and

an interpolating procedure for interpolating the desired pixel from the pixel specified by executing the interpolation-pixel specifying procedure.

**26.** A computer program described in a computer-readable format to execute, on a computer, processing for an image imaged by imaging means that has color filters for color coding, the computer program **characterized by** causing the computer to execute:

a correlation-value calculating procedure for calculating, for an image signal imaged by the imaging means, at least a first correlation value and a second correlation value indicating a degree of correlation among pixels;

a reliability calculating procedure for calculating reliability concerning the respective correlation values calculated by executing the correlation-value calculating procedure; and

an interpolating procedure for interpolating a desired pixel in interpolation processing corresponding to the reliability.

**27.** An image processing device **characterized by** comprising:

correlation value calculating means for calculating plural correlation values indicating degrees of correlation of an image for a pixel to be interpolated on a solid-state imaging device that has filters of predetermined color coding;

judging means for judging a direction in which interpolation should be performed by calculating, in different directions, at least two patterns of the plural correlation values calculated by the correlation value calculating means and comparing the correlation values of at least two patterns with correlation lines obtained by plotting the correlation values with respect to straight lines of various angles; and

interpolating means for applying interpolation processing to the pixel to be interpolated on the basis of information on pixels around the pixel to be interpolated present in the direction judged by the judging means.

**28.** An image processing device according to claim 27, **characterized in that** the correlation value calculating means calculates the plural correlation values with pixels around the pixel to be interpolated as centers.

**29.** An image processing device according to claim 27, **characterized in that**
the correlation value calculating means calculates an average of higher order plural correlation values with high correlation among the plural correlation values, and
the judging means judges, on the basis of the average of the higher order plural correlation values, a direction in which interpolation should be performed.

**30.** An image processing device according to claim 27, **characterized in that** the correlation value calculating means calculates the plural correlation values from a ratio of a first filter output obtained by applying filtering processing by a first band-pass filter to a first direction and a second filter output obtained by applying filtering processing by a second band-pass filter, which has a same filter characteristic as the first band-pass filter, to a second direction orthogonal to the first direction.

**31.** An image processing device according to claim 27, **characterized in that** the different directions are directions shifted from each other by 45°.

**32.** An image processing device according to claim 31, **characterized in that** the judging means considers, when two correlation values for the different directions are on the correlation line, that reliability of correlation is high and considers, when the two correlation values are not on the correlation line, that reliability of correlation is low.

**33.** An image processing device according to claim 32, **characterized in that** the interpolating means performs, when the judging means judges that reliability of correlation is high, interpolation using information on pixels around the pixel to be interpolated present in the direction judged by the judging means and performs, when the judging means judges that reliability of correlation is low, interpolation using an average of the information on the pixels around the pixel to be interpolated.

**34.** An image processing device according to claim 27, **characterized in that**, in the predetermined color coding, with respect to a pixel arrangement in which pixels are arranged in a square lattice shape at equal intervals in a horizontal direction and a vertical direction, color components serving as main components in creating a luminance component are arranged to surround respective other color components.

**35.** An image processing device according to claim 27, **characterized in that**, in the predetermined color coding, with respect to an oblique pixel arrangement in which pixels are shifted by 1/2 of pixel pitches for each row and for each column, color components serving as main components in creating a luminance component are arranged to surround respective other color components.

**36.** An image processing device according to claim 35, **characterized by** further comprising:

pre-stage interpolation processing means for changing color coding for the oblique pixel arrangement to color coding of a Bayer arrangement according to interpolation processing; and
post-stage interpolation processing means for applying Bayer interpolation processing that uses interpolation to the color coding of the Bayer arrangement, and in that
the pre-stage interpolation processing means includes:

correlation value calculating means for calculating plural correlation values indicating degrees of correlation of an image for the pixel to be interpolated;
judging means for judging a direction in which interpolation should be performed by calculating, in different directions, at least two patterns of the plural correlation values calculated by the correlation value calculating means, and comparing the correlation values of at least two patterns with correlation lines obtained by plotting the correlation values with respect to straight lines of various angles; and
interpolating means for applying interpolation processing to the pixel to be interpolated on the basis of information on pixels around the pixel to be interpolated present in the direction judged by the judging means.

**37.** An image processing method **characterized by** comprising:

a first step of calculating plural correlation values indicating degrees of correlation of an image for a pixel to be interpolated on a solid-state imaging device that has filters of predetermined color coding;
a second step of judging a direction in which interpolation should be performed by calculating, in different directions, at least two patterns of the plural correlation values calculated in the first step and comparing the correlation values of at least two patterns with correlation lines obtained by plotting the correlation values with respect to straight lines of various angles; and
a third step of applying interpolation processing to the pixel to be interpolated on the basis of information on pixels around the pixel to be interpolated present in the direction judged in the second step.

**38.** An imaging apparatus **characterized by** comprising:

a solid-state imaging device that has a filter of predetermined color coding; and
an image processing device that processes an output signal of the solid-state imaging device, and in that
the image processing device includes:

correlation value calculating means for calculating plural correlation values indicating degrees of correlation of an image for a pixel to be interpolated on the solid-state imaging device;

judging means for judging a direction in which interpolation should be performed by calculating, in different directions, at least two patterns of the plural correlation values calculated by the correlation value calculating means and comparing the correlation values of at least two patterns with correlation lines obtained by plotting the correlation values with respect to straight lines of various angles; and

interpolation processing means for applying interpolation processing to the pixel to be interpolated on the basis of information on pixels around the pixel to be interpolated present in the direction judged by the judging means.

## FIG. 1

EP 1 793 620 A1

# FIG. 2

# FIG. 3

LIMITING RESOLUTION LINE

# FIG. 4

BPF
OUTPUT

0 dB

1/4 fs        1/2 fs

# FIG. 5

VERTICAL
RESOLUTION

(1/2) fs

G LIMITING
RESOLUTION

(1/4) fs

RB LIMITING
RESOLUTION

(1/4) fs        (1/2) fs        HORIZONTAL
RESOLUTION

## FIG. 6

| R | G | B | G | R | G | B | G | R |
|---|---|---|---|---|---|---|---|---|
| G | G | G | G | G | G | G | G | G |
| B | G | R | G | B | G | R | G | B |
| G | G | G | G | G | G | G | G | G |
| R | G | B | G | R | G | B | G | R |
| G | G | G | G | G | G | G | G | G |
| B | G | R | G | B | G | R | G | B |
| G | G | G | G | G | G | G | G | G |
| R | G | B | G | R | G | B | G | R |

d    4d    2d    4d

## FIG. 7

VERTICAL RESOLUTION

(1/2) fs

(1/4) fs

G LIMITING RESOLUTION

RB LIMITING RESOLUTION

(1/4) fs     (1/2) fs

HORIZONTAL RESOLUTION

## FIG. 8

1/fs

| | G1 | | G2 | |
|---|---|---|---|---|
| G3 | G4 | G5 | G6 | G7 |
| | G8 | X | G9 | |
| G10 | G11 | G12 | G13 | G14 |
| | G15 | | G16 | |

# FIG. 9

# FIG. 10

START

S11

NO ← INTERPOLATION PIXEL X?

YES

| CALCULATE CORRELATION VALUES IN H AND V DIRECTIONS — S12 | CALCULATE CORRELATION VALUES IN NH AND NV DIRECTIONS — S15 |
| SELECT CORRELATION VALUES HAVING HIGH RELIABILITY — S13 | SELECT CORRELATION VALUES HAVING HIGH RELIABILITY — S16 |
| AVERAGE CORRELATION VALUES SELECTED TO OBTAIN ONE CORRELATION VALUE — S14 | AVERAGE CORRELATION VALUES SELECTED TO OBTAIN ONE CORRELATION VALUE — S17 |

COMPARE CORRELATION BETWEEN CORRELATION VALUES IN H AND V DIRECTIONS AND CORRELATION VALUES IN NH AND NV DIRECTIONS — S18

S19

IS THERE RELIABILITY OF CORRELATION?     NO

YES     S20                    S21

| INTERPOLATE INTERPOLATION PIXEL WITH PIXELS IN DIRECTION HAVING CORRELATION (RESOLUTION-ORIENTED) | INTERPOLATE INTERPOLATION PIXEL WITH AVERAGE OF PIXELS AROUND INTERPOLATION PIXEL (S/N-ORIENTED) |

END

## FIG. 11

BPF
OUTPUT

0 dB

1/4 fs          1/2 fs

## FIG. 12

BPF
OUTPUT

0 dB

1/4 fs          1/2 fs

# FIG. 13

(a) S_H = 1.0
S_NH = 0.5

(b) S_H = 0.5
S_NH = 1.0

(c) S_H = 0.0
S_NH = 0.5

(d) S_H = 0.5
S_NH = 0.0

(e) S_H = 1.0
S_NH = 0.5

# FIG. 14

# FIG. 15

FIG. 16

IMAGE SIGNAL INPUT

IMAGE SIGNAL OUTPUT

45 — INTERPOLATION CIRCUIT
451 — FIRST INTERPOLATION CIRCUIT
452 — SECOND INTERPOLATION CIRCUIT

44 — JUDGING CIRCUIT

43 — COMPARATOR

36 — AVERAGE CALCULATING CIRCUIT
S_H
S_V

42 — AVERAGE CALCULATING CIRCUIT
S_NH
S_NV

35 — SELECTION CIRCUIT
41 — SELECTION CIRCUIT

31 — G4HV-DIRECTION-CORRELATION-VALUE CALCULATING CIRCUIT
32 — G6HV-DIRECTION-CORRELATION-VALUE CALCULATING CIRCUIT
33 — G11HV-DIRECTION-CORRELATION-VALUE CALCULATING CIRCUIT
34 — G13HV-DIRECTION-CORRELATION-VALUE CALCULATING CIRCUIT

37 — G5NH-AND-NV-DIRECTION-CORRELATION-VALUE CALCULATING CIRCUIT
38 — G8NH-AND-NV-DIRECTION-CORRELATION-VALUE CALCULATING CIRCUIT
39 — G9NH-AND-NV-DIRECTION-CORRELATION-VALUE CALCULATING CIRCUIT
40 — G12NH-AND-NV-DIRECTION-CORRELATION-VALUE CALCULATING CIRCUIT

23A — INTERPOLATION PROCESSOR

# FIG. 17

GR LINE →
G LINE →
GB LINE →
G LINE →

d/√2

d

2√2d

# FIG. 18

d/√2

| R | | G | | R | | G | | R |
|---|---|---|---|---|---|---|---|---|
| | G | | G | | G | | G | |
| G | | B | | G | | B | | G |
| | G | | G | | G | | G | |
| R | | G | | R | | G | | R |
| | G | | G | | G | | G | |
| G | | B | | G | | B | | G |
| | G | | G | | G | | G | |
| R | | G | | R | | G | | R |

## FIG. 19

23B

INTERPOLATION PROCESSOR

231

PRE-STAGE INTERPOLATION PROCESSOR

232

PRE-STAGE INTERPOLATION PROCESSOR

## FIG. 20

| G |   | G |   | G |   | G |   | G |
|---|---|---|---|---|---|---|---|---|
|   | G |   | G |   | G |   | G |   |
| G |   | G |   | G |   | G |   | G |
|   | G |   | G |   | G |   | G |   |
| G |   | G |   | G |   | G |   | G |
|   | G |   | G |   | G |   | G |   |
| G |   | G |   | G |   | G |   | G |
|   | G |   | G |   | G |   | G |   |
| G |   | G |   | G |   | G |   | G |

## FIG. 21

| G | G | G | G | G | G | G | G | G |
|---|---|---|---|---|---|---|---|---|
| G | G | G | G | G | G | G | G | G |
| G | G | G | G | G | G | G | G | G |
| G | G | G | G | G | G | G | G | G |
| G | G | G | G | G | G | G | G | G |
| G | G | G | G | G | G | G | G | G |
| G | G | G | G | G | G | G | G | G |
| G | G | G | G | G | G | G | G | G |
| G | G | G | G | G | G | G | G | G |

## FIG. 22

VERTICAL
DIRECTION

LIMITING RESOLUTION OF
COLOR CODING EXAMPLE 1

LIMITING RESOLUTION OF
COLOR CODING EXAMPLE 2

BAYER ARRANGEMENT

HORIZONTAL
DIRECTION

$(1/2)$ fs        $(1/\sqrt{2})$ fs

# FIG. 23

23B'

INTERPOLATION PROCESSOR

231

PRE-STAGE INTERPOLATION PROCESSOR

233

232

PRE-STAGE INTERPOLATION PROCESSOR

# FIG. 24

1/fs

| GR LINE → | R | G | R | G | R |
| GB LINE → | G | B | G | B | G |
| | R | G | R | G | R |
| | G | B | G | B | G |
| | R | G | R | G | R |

# FIG. 25

DEMOSAIC

# FIG. 26

S_H_G4

S_H_G6

S_H_G11

S_H_G13

# FIG. 27

| | G1 | | G2 | |
|---|---|---|---|---|
| S_H_G4 — G3 | G4 | G5 | G6 | G7 |
| | G8 | X | G9 | X |
| G10 | G11 | G12 | G13 | G14 — S_H_G13 |
| | G15 | | G16 | |

# FIG. 28

| | G1 | | G2 | |
|---|---|---|---|---|
| G3 | G4 | G5 | G6 | G7 |
| S_H — G8 | | X | G9 | X |
| G10 | G11 | G12 | G13 | G14 |
| | G15 | | G16 | |

# FIG. 29

S_NH_G5

S_NH_G8

S_NH_G9

S_NH_G12

| | G1 | | G2 | |
|---|---|---|---|---|
| G3 | G4 | G5 | G6 | G7 |
| | G8 | X | G9 | X |
| G10 | G11 | G12 | G13 | G14 |
| | G15 | | G16 | |

# FIG. 30

S_NH_G5

S_NH_G9

| | G1 | | G2 | |
|---|---|---|---|---|
| G3 | G4 | G5 | G6 | G7 |
| | G8 | X | G9 | X |
| G10 | G11 | G12 | G13 | G14 |
| | G15 | | G16 | |

# FIG. 31

| | G1 | | G2 | |
|---|---|---|---|---|
| G3 | G4 | G5 | G6 | G7 |
| | G8 | X | G9 | X |
| G10 | G11 | G12 | G13 | G14 |
| | G15 | | G16 | |

S_NH

# FIG. 32

CORRELATION VALUE

1.0

0.5

|S_NH-0.5| |S_H-0.5|

| (a), (e) | (b) | (c) | (d) | (a), (e) |
|---|---|---|---|---|
| 90° | 45° | 0° | -45° | -90° |

ANGLE OF FREQUENCY CHART

<table>
<tr><td colspan="2" align="center">**INTERNATIONAL SEARCH REPORT**</td><td>International application No.<br><br>PCT/JP2006/312366</td></tr>
</table>

A. CLASSIFICATION OF SUBJECT MATTER
*H04N9/07*(2006.01)i

According to International Patent Classification (IPC) or to both national classification and IPC

B. FIELDS SEARCHED

Minimum documentation searched (classification system followed by classification symbols)
H04N9/07

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 10-150668 A (Sony Corp.),<br>02 June, 1998 (02.06.98),<br>Par. Nos. [0020] to [0044]; Figs. 3 to 6<br>& US 6295087 B1 | 1,12,23,25<br>2-11,13-22,<br>24,26-38 |
| X<br>A | JP 2004-299055 A (Pentax Kabushiki Kaisha),<br>02 June, 2004 (02.06.04),<br>Par. Nos. [0009] to [0036]; Figs. 1 to 11<br>& US 2004/160521 A1 | 1,12,23,25<br>2-11,13-22,<br>24,26-38 |
| X<br>A | JP 2004-364201 A (Fuji Photo Film Co., Ltd.),<br>24 December, 2004 (24.12.04),<br>Par. Nos. [0019] to [0078]; Figs. 1 to 6<br>(Family: none) | 1,12,23,25<br>2-11,13-22,<br>24,26-38 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    22 September, 2006 (22.09.06) | Date of mailing of the international search report<br>    03 October, 2006 (03.10.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**EP 1 793 620 A1**

**INTERNATIONAL SEARCH REPORT**

International application No.

PCT/JP2006/312366

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2005-94119 A (Canon Inc.),<br>07 April, 2005 (07.04.05),<br>Par. Nos. [0018] to [0137]; Figs. 1 to 23<br>& US 2005/58361 A1 | 1,12,23,25<br>2-11,13-22,<br>24,26-38 |
| A | JP 2004-48465 A (Olympus Corp.),<br>12 February, 2004 (12.02.04),<br>Full text; Figs. 1 to 17<br>& US 2004/105015 A1 | 1-38 |

Form PCT/ISA/210 (continuation of second sheet) (April 2005)

49

**REFERENCES CITED IN THE DESCRIPTION**

**Patent documents cited in the description**

- JP 2005107037 A

- JP 11177994 A